# EUROPEAN PATENT SPECIFICATION

(11) **EP 4 383 499 B1**
(45) Date of publication and mention of the grant of the patent: **27.08.2025**
(21) Application number: 22315313.1
(22) Date of filing: 07.12.2022
(51) Int. Cl.: H02J 3/00, H02J 3/14

(54) **METHOD AND ARRANGEMENT TO MANAGE A LOCAL LOW-VOLTAGE ELECTRICAL POWER GRID**
VERFAHREN UND ANORDNUNG ZUR VERWALTUNG EINES LOKALEN NIEDERSPANNUNGSSTROMNETZES
PROCÉDÉ ET AGENCEMENT POUR GÉRER UN RÉSEAU ÉLECTRIQUE BASSE TENSION LOCAL

(43) Date of publication of application: 12.06.2024
(73) Proprietor: HAGER-ELECTRO SAS, 67210 Obernai (FR)
(72) Inventor: Hager, Torsten, 55218 INGELHEIM AM RHEIN (DE); Hoffmann, Arnaud, 35510 BUTZBACH (DE); Reiner, Ulrich, 67691 HOCHSPEYER (DE); Helfter, Marc, 67114 ESCHAU (FR)
(74) Representative: Ipsilon Strasbourg

(56) References cited:
- JP-B2- 6 956 015
- US-A1- 2015 094 871
- US-A1- 2017 345 107
- US-A1- 2018 329 383
- US-A1- 2021 050 726

## Description

The invention relates to the field of electrical power management taking into consideration both technical and economic issues, and to improve power distribution with respect to the end users as well as regarding the resources and the distribution structures.

The invention concerns a computer implemented method to manage a local low-voltage electrical power grid, as well as a corresponding self-managed local low-voltage electrical power grid arrangement.

Nowadays countrywide regulations exist to try to adapt the electric power consumption - to the power offer, by inciting end users to subscribe to and of course respect a yearly calendar with days where the price of the kW is set high (days of high consumption and/or low offer), so as to allow them to benefit from low prices on most of the other days during the rest of the year. Time windows with different price rates have also been proposed which extend over a daily time span. Now, these existing solutions, based on specific subscriptions between provider and users, are rigidly set over long time periods, cannot adapt to short term changes, rely on sophisticated long term forecasts and make use of the extension of the nationwide network and its interconnection with other national networks to even out consumption peaks. Such a solution is obviously nor adapted for the management of a closed autonomous local network.

On the one hand, the load situation in the low-voltage distribution grids is nowadays changing due in particular to the increasing number of electric vehicles, and also to the increasing number of electric heating and air-conditioning units, which have a high-power demand over longer periods of time (up to several hours, and even major parts of the day). This leads to parallel operation of a large number of such consumer systems and, as a result, to a high simultaneity factor. As proven in various studies, this can result in an overload of the equipment and also in voltage band violations.

On the other hand, an ever-increasing spread of photovoltaic systems, and other electricity production systems exploiting natural energy sources, leads to similar problems but in the opposite direction of current flow, unless equipped with grid-serving storage systems, which in any case have generally limited capacity and are quite expensive (NB: here the storage capacity of the batteries of electric cars may also be considered).

In today's regulatory and control framework, attempts are being made to counteract this partly uncontrollable, stressful situation in the distribution grids, by regulating individual plants. However, this method shows two major obstacles when attempts are made to apply it practically.

First, the grid status (supply/demand) must be known at all times and also as a forecast for the targeted future control of the plants (which may also need a non-compressible time period to be able to increase or decrease their production). To achieve this, corresponding measurement technology and simulation tools must be installed throughout the distribution grids, which is not yet the case today and is/will be very costly.

Furthermore, regulation today is often carried out directly by the grid operator without taking into account the interests, necessities and comfort of the end customers/users. For example, it might not be a problem for one end customer to completely interrupt the charging of his electric vehicle for a certain period of time, or shift it completely to a future timeslot, when the distribution grid is under stress (not enough power available for all consumer needs), whereas another end customer urgently might need his vehicle to be charged at full power, at the same time. Today, the charge would be, based on an unilateral decision of the grid manager, reduced to 50 % for both of them, for example.

Some existing proposals try to pursue purely market-based approaches, generally centralized and widespread, in which the customers are motivated to control loads (increase or reduce power) through incentives in times of critical grid conditions. However, these procedures raise the question of the determination of a reference value for the possible beneficial interventions of the users, and their final remuneration. In concrete terms, this raises the question of the level of remuneration of a user for respecting a limit value of the energy drawn from the grid: should this remuneration be the same for all participating users or should it depend on the specific effort of the user and/or on the degree of beneficial impact on the grid situation? In the latter case, the challenge is to determine this effort in a way that cannot be manipulated or lead to pure speculative behavior. Equal remuneration for all participants seems unfair and does little to motivate participation if a greater effort is required. In addition, in all these known models there is also the major challenge of knowing the state of the network and contributing in keeping its stress level within acceptable limits.

US 2015/094871 A1 discloses a micro grid manager that monitors and estimates an actual power flow. A transformer is and requests received by the micro grid manager to provide power to consuming devices is disclosed.

In this context, the invention has set as its main object to provide a remedy to these drawbacks by proposing a method to manage a low-voltage electrical power grid, and a corresponding self-managed local low-voltage electrical power grid arrangement, which allow to avoid as much as possible stress situations in the considered grid, in terms of global supply/demand difference over said grid, which do not require sophisticated simulation means, nor numerous measuring and control means spread over the grid, and which allow the end users to optimize their entering and exiting electricity flows, also economically, and by also weighing up his or her living comfort.

In other words, the major aim of the present invention is to seek to provide a method and an arrangement for a stable autonomous functioning of a local electrical grid which has a limited capacity, and which may be faced with abnormal, unplanned power demands and/or offers made by users connected to the grid, possibly resulting from external, maybe uncontrollable/unforeseeable factors or from specific wishes of users. Another aim is to seek to plan and adapt for each user, even in the very short term, its power consumption to the best of its interests, expectations and/or preset preferences in terms of comfort, usual lifestyle and economic considerations. Finally, the proposed solution should run automatically and in a self-regulated way, without human intervention.

To that purpose, the present invention concerns a method to manage a local low-voltage electrical power grid,
wherein said grid is allocated a global deliverable power and is connected i) to the secondary of a single transformer dedicated to supply a given maximum amount of outside electrical power to said grid and ii) to buildings which correspond to respective grid connected end users,
wherein a preset electrical power consumption value is allotted and provided by default to each building, said value corresponding to a fraction of the provided outside electrical power,
wherein each building comprises a building power management system which is monitoring and controlling the power flows within the considered building and configured to determine the future power needs of the concerned building,
wherein the power supply and consumption by the buildings or users, as well as the power distribution within the grid, is split temporally and considered within consecutive timeslots,
wherein for each future timeslot a considered building may be either in need of more or of less power than its assigned value, or consume approximately said assigned value,
wherein the power management systems of the buildings or users which are either able and willing to supply a given amount of excess power to or in need and willing to draw a given amount of lacking power from the grid, for at least one given future timeslot, submit corresponding requests to an electronic marketplace associated with the grid,
wherein said electronic market place handles said demand and supply requests and strives to settle power exchange deals between the implied buildings or users, preferably at the latest before the end of the timeslot immediately preceding the concerned timeslot, by exchanging with the concerned power management systems, by making use of an adapted matching algorithm and by taking into consideration, as handling parameters, at least, a minimal selling price and a maximum buying price preset by each connected user and, as imperative limiting conditions, at least the global deliverable power of the grid during the considered timeslot and a maximum supply limit for each connected user, corresponding at least to the physical limit of its connection to the grid and preferably to its preset default allotted consumption power value.

Thus, the invention relies on the compensatory and self-regulating properties, over a considered local grid, of short time, direct peer to peer (i.e., user to user), electric power exchanges mainly triggered by comfort considerations and financial incentives, in order to achieve the set aim and reach the announced objective.

The invention also concerns a self-managing local low-voltage electrical power grid arrangement, comprising
a local low-voltage grid, which is allocated a global deliverable power,
a transformer dedicated to supply a given maximum amount of outside electrical power to said grid,
buildings which correspond to respective end users and are connected to each other and to the secondary of the transformer through the grid, each building comprising a building power management system which automatically monitors and controls the power flows of said building, is configured to determine the future power needs of the concerned building and is designed to communicate with an electronic marketplace, and,
an electronic marketplace running a matching algorithm,
wherein a preset electrical power consumption value is allotted and provided by default to each building, said value corresponding to a fraction of the provided outside electrical power,
wherein the power supply and consumption by the buildings or users, as well as the power distribution within the grid, is split temporally and considered by the matching algorithm and by the building power management systems within consecutive timeslots, a building being, for each future timeslot, either in need of more or of less power than its assigned value, or expected to consume approximately said assigned value,
wherein the power management systems of the buildings or users which are either able and willing to supply a given amount of excess power to the grid or in need and willing to draw a given amount of lacking power from the grid, for at least one given future timeslot, are designed to elaborate and submit corresponding requests to electronic marketplace,
wherein said electronic marketplace is designed to automatically handle said demand and supply requests and to strive to settle power exchange deals between the implied buildings or users, preferably at the latest before the end of the timeslot immediately preceding the concerned timeslot, by exchanging with the concerned power management systems, by making use of the adapted matching algorithm and by taking into consideration, as handling parameters, at least a minimal selling price and a maximum buying price preset by each connected user and, as imperative limiting conditions, at least the global deliverable power of the grid during the considered timeslot and a maximum supply limit for each connected user, corresponding at least to the physical limit of its connection to the grid and preferably to its preset default allotted consumption power value.

The invention will be better understood using the description below, which relates to at least one preferred embodiment, given by way of non-limiting examples and explained with reference to the accompanying drawings, in which
- figure 1 is a schematic perspective view of a part of a local grid connected through a dedicated transformer to power sources,
- figure 2 is a schematic functional view of a building power management system (BPMS) associated to each end user or building connected to the local grid of figure 1,
- figure 3 shows by way of a flowchart the main operational steps performed by the building power management systems of two users (one offering excess power and one demanding lacking power) connected to the local grid shown in figure 1 and by the marketplace software prior to a possible peer to peer exchange of power for a given timeslot X to Y (TSn) between said two users,
- figure 4 shows the two series of tasks A and B performed by a given building power management system of a connected user, during three successive timeslots TSn-1, TSn and TSn+1, and
- figure 5 shows a sequence of the two series of tasks A and B of figure 4 over a longer period of time.

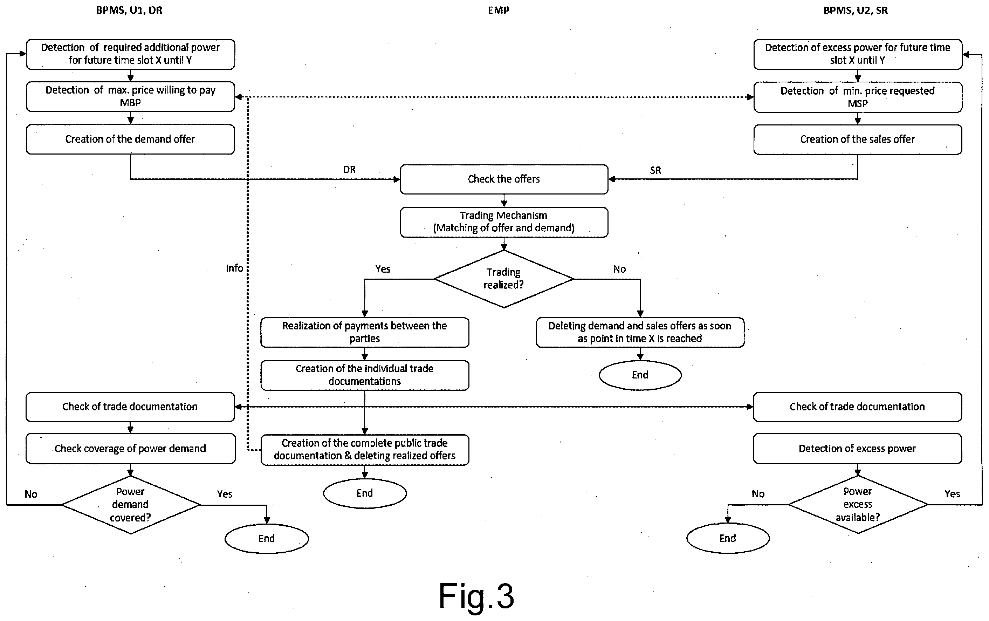

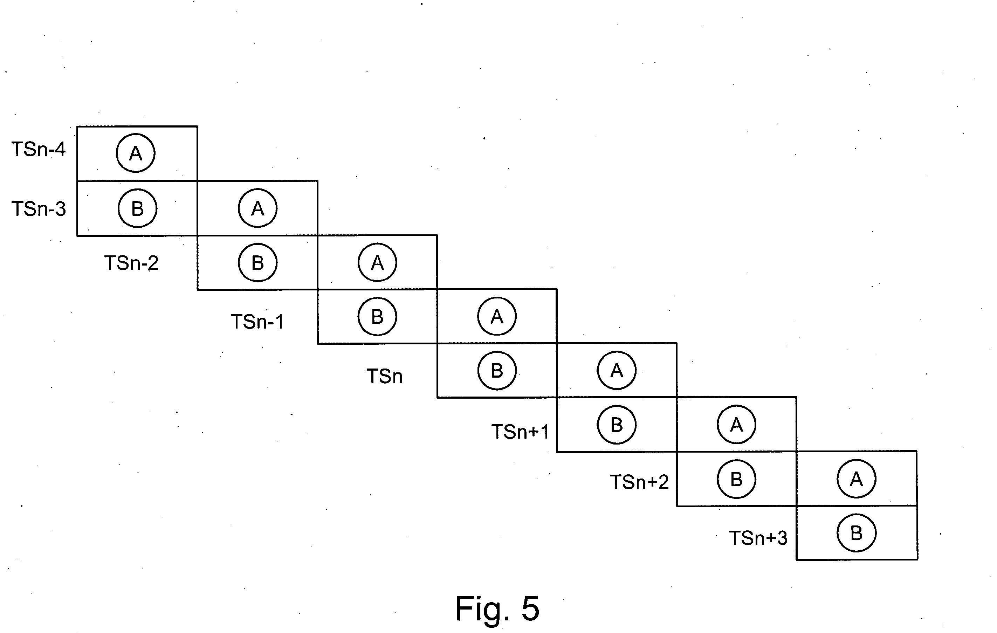

The attached figures 3 to 5 show, by way of example, a method to manage a local low-voltage electrical power grid (G),
wherein said grid (G) is allocated a global deliverable power (GDP) and is connected i) to the secondary of a single transformer (T) dedicated to supply a given maximum amount of outside electrical power (OP) to said grid and ii) to buildings (B) which correspond to respective grid connected end users (U),
wherein a preset electrical power consumption value (ACPV) is allotted and provided by default to each building (B), said value corresponding to a fraction of the provided outside electrical power (OP),
wherein each building (B) comprises a building power management system (BPMS) which is monitoring and controlling the power flows within the considered building (B) and configured to determine the future power needs of the concerned building (B),
wherein the power supply and consumption by the buildings (B) or users (U), as well as the power distribution within the grid (G), is split temporally and considered within consecutive timeslots (TS),
wherein for each future timeslot (TSn) a considered building (B) may be either in need of more or of less power than its assigned value (ACPV), or consume approximately said assigned value (ACPV),
wherein the power management systems (BPMS) of the buildings (B) or users (U) which are either able and willing to supply a given amount of excess power to or in need and willing to draw a given amount of lacking power from the grid (G), for at least one given future timeslot (TSn), submit corresponding requests (SR, DR) to an electronic marketplace (EMP) associated with the grid (G),
wherein said electronic market place (EMP) handles said demand and supply requests (DR, SR) and strives to settle power exchange deals between the implied buildings (B) or users (U), preferably at the latest before the end of the timeslot (TSn-1) immediately preceding the concerned timeslot (TSn), by exchanging with the concerned power management systems (BPMS), by making use of an adapted matching algorithm and by taking into consideration, as handling parameters, at least, a minimal selling price (MSP) and a maximum buying price (MBP) preset by each connected user (U) and, as imperative limiting conditions, at least the global deliverable power (GDP) of the grid during the considered timeslot (TSn) and a maximum supply limit for each connected user (U), corresponding at least to the physical limit of its connection to the grid (G) and preferably to its preset default allotted consumption power value (ACPV).

Advantageously, the items or objects of the demand and supply requests (DR, SR) are electrical energy items consisting of a power value which is constant over a considered timeslot (TSn), said value being superior to a minimum preset threshold value and each request being preferably limited to a single timeslot or extending over several ensuing timeslots. Now, requests extending timely over only a fraction of a timeslot may also be considered as described herein after, in particular when special emergency circumstances apply.

Thus, the invention proposes, in a closed electrical environment with limited power resources (i.e., a local grid fed by a single transformer), a flexible and adaptative power management solution which allows grid connected users to trade and exchange, at their own discretion and interest, directly between them, bicomponent items consisting of power units associated with time slots. This solution relies on an initial individual power allotment for each user, based on the external power supply to the grid, and on the mutually contrary temporary surpluses, needs and wishes of the different users, to reach by way of natural compensation a globally balanced distribution of capacity across the network.

The electronic marketplace (EMP) may be of the type known as "T7" Trading Architecture and be hosted either on a virtual server or on the server of a possible grid management system (GMS).

The concrete way by which the incoming requests (SR, DR) are handled and by which the power packages exchange deals are settled (between buyers and sellers) can be derived from various already existing trading processes and models.

For example, in a trading process similar to stock trading, both buyers and sellers place their bids. The matching algorithm then brings them together. However, if the two bids are not compatible, no trade takes place. Both parties can create new bids accordingly. This continues until a trade occurs or the participants give up buying or selling services.

As an alternative, and in contrast to the previous stock trading procedure, the number of iterations could be reduced if, first, one group publishes its bids (e.g., the sellers (surplus)) and then the other group (in this case the buyers (shortage)) buys bids (offers). The disadvantage of this procedure is the lack of transparency regarding possible further demand from the second group. The first group does not receive any information as to whether there are further (higher) demands from the second group and thus not all possible transactions may be envisaged, or not all demand may be met.

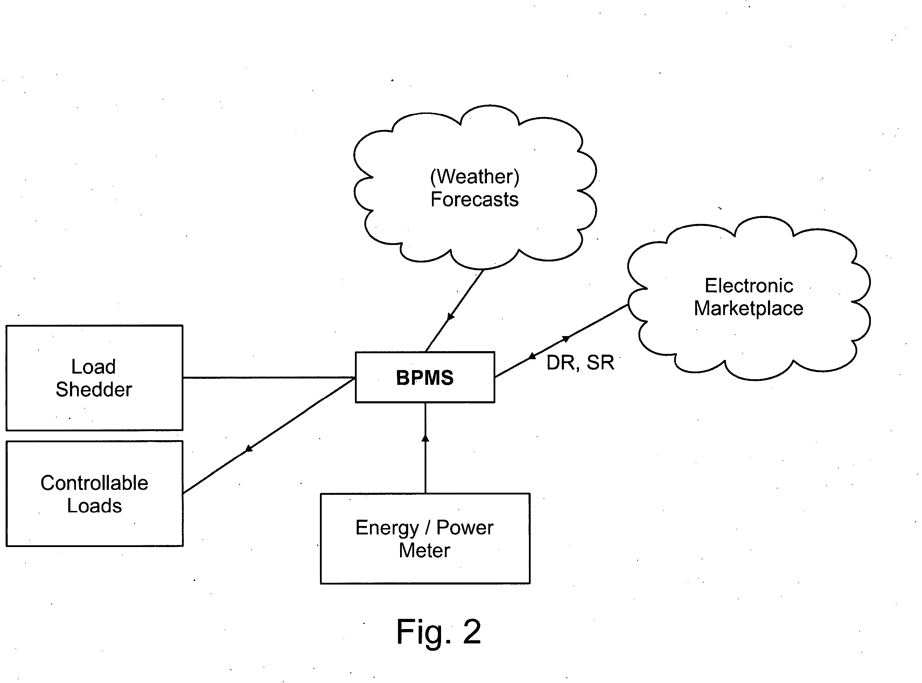

According to the invention, and as shown on figure 2, each building power management system (BPMS) building power management system (BPMS) fulfills automatically the following operations: collecting, storing and evaluating historical consumption data of the associated building (B), computing repeatedly a consumption forecast for said building and evaluating its potential need to positively balance its capacity, at least for the next timeslot (TSn), elaborating and sending demand and supply request (DR, SR) messages and cutting off selectively some or all loads of the associated building (B), or triggering adapted cut off means.

In addition to the aforementioned tasks, each building power management system (BPMS) monitors and manages continuously the loads of the associated building (B) with reference to the preset electrical power consumption value (ACPV) of said building (B) and in accordance with i) the issues of the handling of its demand and supply requests (DR, SR) and ii) the current grid stress or the available grid capacity, and cuts off, if necessary, the load(s) generating a power consumption in excess of the preset electrical power consumption value (ACPV) of said building.

In connection with the practical functioning of the method, each connected user (U) has, during a considered timeslot (TSn) and with respect to a possible power exchange through the grid (G) within said timeslot, a temporary status as either a passive user or an active user. Furthermore, an active user is with respect to its own situation either a possible supplier of excess power or a possible consumer of lacking power, and the status of each user (U) is updated during each timeslot by the power management systems (BPMS) of the buildings (B) or users (U), the identity of at least each active user (U) remaining anonymous to the other users (U) connected to the grid (G).

This last provision is a good preventive measure towards potential purely speculative behaviors of the users.

Preferably, as indicated earlier, the situation relating to the supply and demand deals for a given timeslot for all users should be settled latest at the end of the immediately preceding timeslot.

Nevertheless, and according to a possible advantageous alternative, allowing an even better limitation of the stress situation on the grid while also increasing the possibilities for the users, depending on last minutes changes or evolutions, it can be envisaged that demand and supply requests (DR, SR) for a given timeslot (TSn) can also be sent during said timeslot (TSn) until a predetermined deadline within said timeslot (TSn), the power management system (BPMS) of a given building (B) or user (U) being allowed to send repeatedly demand and supply request (DR, SR) messages to the electronic market place (EMP), with the same or modified handling parameters and indicated power amount, as a result of a repeatedly updated power consumption forecast for the remaining time in said timeslot (TSn), performed by said power management system (BPMS).

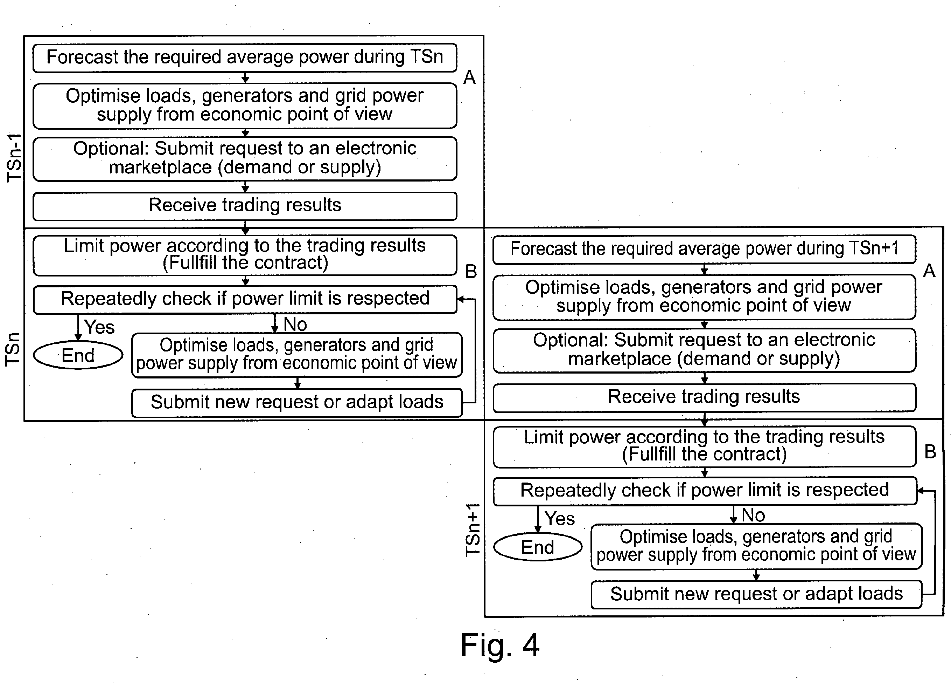

This alternative embodiment, which is illustrated by way of example by figure 4, is only applicable if the marketplace is adapted for it and the building power management systems are sufficiently fast, autonomous and provided with the requested programming and decision-making authority. As shown on figure 4, the BPMS ensures simultaneously, during the timeslot TSn, the handling of the monitoring/managing/adjusting of the power for said timeslot TSn and the forecast/adjustment/possible trading of the power for the next timeslot TSn+1.

Despite the logical, over the grid self out-balancing of supply and demand requests, the possibility of the building power management systems (BPMS) to regulate their associated loads and the faculty of the grid to absorb short time stress peaks (cumulated matching strong power demands), situations may occur when the grid capacity is nevertheless outreached beyond what is acceptable technically and safety wise.

In order to be able to handle such exceptional situations, the local grid (G) may have permanently at its disposal a power reserve (PR). When needed, at least part of said power reserve may be selectively injected into the grid (G), for example in order to balance out the grid within a considered timeslot (TSn), when power demand is expected to be higher than power supply within the grid during said timeslot, and when preset injection conditions are met.

Preferably, said power reserve (PR) is managed by a specific power management system (GMS), for example a grid management system (GMS), able to communicate and interact with the electronic marketplace (EMP), said specific power management system (GMS) sending only supply request (SR) to said electronic market place (EMP). The combined sum of the power reserve (PR) and of all allotted, electrical power consumption values (ACPV) of the buildings (B) connected to the grid (G) is preferably equal to the outside electrical power (OP) supplied by the secondary of the transformer (T) to said grid (G).

While demand requests (DR) are always linked to loads associated with the concerned building (B), the nature and the cause of the supply requests (SR) may be various.

In accordance with a possible feature of the invention, some supply requests (SR) result from the shifting of effective consumption of at least (a) fraction(s) of allotted power consumption(s) of (a) building(s) (B) from (a) given timeslot(s) to (a) future timeslot(s).

In accordance with another possible feature, some supply requests (SR) result at least partly from temporary generation of power by (a) device(s) (PVE) driven by (a) natural source(s) of energy, such as sun, wind and water for example, said source(s) being comprised within, associated with or connected to at least some of the buildings (B). The power management systems (BPMS) of the concerned buildings (B) forecast the power production(s) of such (a) device(s), at least over the next timeslot (TSn), and integrate it (them) in the capacity forecast of said buildings (B).

Advantageously, weather forecast data is provided to and processed at least by the power management system(s) (BPMS) of the building(s) (B) comprising (a) device(s) (PVE) able to exploit (a) natural source(s) of energy, and wherein the results of the processing, which may be mutualized among several buildings, are taken into account for determining the future power needs of the concerned building(s) (B).

In accordance with yet another possible feature, some supply requests (SR) result from the wish of (a) connected user(s) (U) to empty at least partially at least one electricity storage device (ESD) associated to said user(s) (U) and /or located within the concerned building(s) (B), such as for example the battery of an electric car.

Additionally, and depending on the level of equipment of a building or on the location of said building, other means to produce electric power on site may be available, by exploiting directly natural sources of energy (wind, flowing water, ...) or by using fuel combusting generators (if its running cost is economically interesting).

In line with a most safe and foreseeable management of the grid capacity, the supply of power to the local grid (G) may be controlled and conditional. Thus, for example, injection into the grid (G) of excess power during a given timeslot (TSn) by a given building (B), under the supervision of its power management system (BPMS), can be implemented only when (a) corresponding power exchange deal(s) ha(s)ve been achieved with (a) building(s) (B) or user(s) (U) needing more power than allotted to it or him during said same timeslot (TSn). Said deal will have been settled preferably at the latest during the timeslot (TSn-1) immediately preceding the concerned timeslot (TSn), and advantageously before the end of said timeslot (TSn-1).

On the other hand, withdrawal from the grid (G) of lacking power during a given timeslot (TSn) by a given building (B), under the supervision of its power management system (BPMS), may be allowed even if no corresponding deal has been timely settled, and thus no counterbalancing injection of excess power during said timeslot (TSn) by another building (B) occurs, due to injection into the grid (G) of power issued from a power reserve (PR) as far as enough power is available from the power reserve (PR) and only in case the power management system (BPMS) of the concerned building (B) has sent a corresponding agreement or in case of an emergency situation with respect o the concerned building (B).

To facilitate the handling of the requests by the electronic marketplace (EMP), it can be envisaged that the buildings (B) or users (U) are divided into differentiated categories, each category being characterized, with respect to the user or building, by the preset electrical power consumption value (ACPV), by the sizing of the connection to the grid (G), by the consumption profile, by the types of connected loads, by the presence or not of electricity storage device, by the presence or not of electrical power generating device(s) able to exploit (a) natural source(s) of energy, by the minimal selling price (MSP) and/or the maximum buying price (MBP). All users or buildings belonging to the same category are treated in a similar way by the matching algorithm.

According to a possible efficient way of settling the various request, it can be envisaged that the matching algorithm takes into consideration, when handling demand and supply requests (DR, SR) and striving to settle power exchange deals, as additional parameter(s), at least one, preferably several, parameter(s) among i) the stress level of the grid (G), in terms of differences between power availability and power demand, preferably modelled as a time function of the different days of the week, ii) the consumption profiles of at least some users (U) resulting from the aggregation and evaluation of data collected in relation to past behaviors of said users, iii) local weather forecast and/or iiii) the category of the users or buildings.

Advantageously, power consumption deviations of a user (U) or building (B), with respect to its consumption profile or to the features of its user category, are detected by the associated building power management system (BPMS) and are signaled to the electronic marketplace (EMP) and/or lead to adequate measures, such as a change of category of the concerned user or building.

The value of the elementary exchangeable power unit, the duration of the timeslots and the maximum number of consecutive future timeslots to be handled in advance are set functional parameters (during a preliminary calibration or programming phase), but which may be modified over time by the matching algorithm if the stress on the grid (G) exceeds a threshold value or if the grid (G) gets unbalanced, or following requests of a sufficient number of users.

By way of example, the value of the elementary exchangeable power unit is comprised between 200W and 1000W, preferably between 250W and 500W and the duration of each timeslot (TS) is comprised between 5 minutes and 1 hour, advantageously between 10 min and 30 min, preferably from 15 to 20 min, the value(s) of said elementary power unit and/or of said timeslot (TS) being possibly different between daytime and nighttime, possibly also during periods of the day or the night, or depending dynamically on the number of submitted requests (SR, DR).

As illustrated on figure 4, and with respect to a possible practical time related organization of the working of the inventive method, it can be envisaged that, for a given timeslot (TSn), each building power management system (BPMS) handles, simultaneously, the following tasks: i) management of the current power consumption of the concerned building (B) during said timeslot (TSn), in relation to the allocated power limit set at the end of the immediately preceding timeslot (TSn-1) and possibly adjusted during said current timeslot (TSn), and, ii) forecasting the required average power for said building (B) for the next timeslot (TSn+1) and seeking of securing a corresponding or at least approaching power limit before the end of the current timeslot (TSn), possibly by submitting at least one demand or supply request (DR, SR).

Advantageously, task i) mainly comprises: limiting the power consumption of the considered building (B) to the allocated power limit, possibly by taking into account traded power according to demand or supply contract with at least one other user, repeatedly checking, until the end of the current timeslot (TSn), if said limit is respected, and, if not, optimizing the loads and/or the electrical storage or production resources of the building (B) and/or the grid power supply to said building (B) either by submitting a new request (DR, SR), for a remaining fraction of the current timeslot (TSn), or by adapting the loads, if no deal can be formalized in case of additional power demand, or by doing both.

Also favorably, task ii) mainly comprises: forecasting the required average power for the building (B) for the next timeslot (TSn+1), optimizing the loads and/or the electrical storage or production resources of the building (B) and/or the grid power supply of said building (B), in terms of user comfort and costs, possibly submitting at least one supply or demand request (SR, DR) and acknowledging the trading result(s).

It results from the foregoing description in relation to figure 4, that for each couple of two consecutive timeslots, (TSn-1, TSn), (TSn, TSn+1) and so on, a given user (U) or building (B) may be:
- passive in TSn-1 and passive in TSn;
- passive in TSn-1and active in TSn;
- active in TSn-1and passive in TSn; or
- active in TSn-1and active in TSn.

Here "active" means that at least one request (SR or DR) is sent out by the corresponding BPMS during the considered timeslot. The BPMS of a" passive" user will still optimize the loads, the power generation means attached to the building and the grid power supply, but will not resort to send out a request. The same user may of course be active several times during a same timeslot, either by sending out consecutively several requests (depending on the outcome of the handling of previous requests or on the current or foreseeable evolution of the power consumption for said user), or by splitting a single request (SR or DR) for an important power package into several requests for fractions of it (which may proceed more easily towards deals in accordance with the parameters set by the user).

Of course, the human user(s) associated to a given power management system (BPMS) of a building (B) will be involved in the setting of the programmable functioning parameters and of the applied decision criteria of said system. For example, each building power management system (BPMS) is, in a preliminary phase, programmed by a corresponding user by means of an adapted user interface, preferably by filling out a preference questionnaire, including comfort and economic parameters choices.

In said preference questionnaire, and in addition to economic data (MSP, PBP for example), the user may also provide a hierarchic list of the loads which can be cut off/shaded, maybe also depending on the time of the year.

In relation to figure 3, and according to a possible practical embodiment of the inventive method, a power exchange deal between a first active user (U1) in need of additional power during at least one future timeslot (TSn), and willing consumer of said lacking power, and a second active user (U2) having an excess of power available during a least the same timeslot (TSn), and willing supplier of said excess power, comprises the following steps:
- determining by the two respectively involved building power management systems (BPMS) of the amount of lacking or excess power and of the corresponding maximum buying or minimum selling price,
- elaborating the demand or supply requests (DR, SR) and sending them to the electronic marketplace (EMP),
- having said demand request (DR) and said supply request (SR) analyzed by the electronic marketplace (EMP) and submitted to the adapted matching algorithm,
- if no deal is reached within the preset time limit, cancelling both requests (DR and SR) and informing the two users (U1 and U2),
- if a deal is reached within the preset time limit, formalizing the deal by performing/setting the payment procedure between the two users (U1 and U2), preparing the corresponding deed and sending it to the users, verifying the deed and the coverage of the power demand on the side of the first active user (U1), verifying the deed and the coverage of the power supply on the side of the second active user (U2) and finishing the deal if both coverages are confirmed.

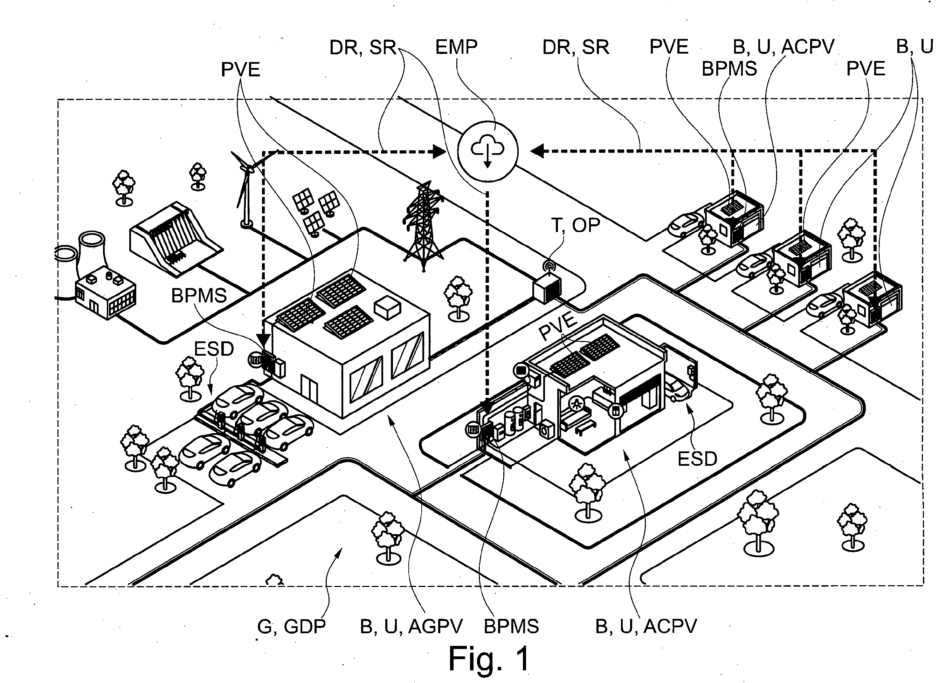

The present invention also encompasses, as schematically shown, as an illustrative example, on figures 1 and 2, a self-managing local low-voltage electrical power grid arrangement, comprising
a local low-voltage grid (G), which is allocated a global deliverable power (GDP),
a transformer (T) dedicated to supply a given maximum amount of outside electrical power (OP) to said grid (G),
buildings (B) which correspond to respective end users (U) and are connected to each other and to the secondary of the transformer (T) through the grid (G), each building (B) comprising a building power management system (BPMS) which automatically monitors and controls the power flows of said building, is configured to determine the future power needs of the concerned building (B) and is designed to communicate with an electronic market place (EMP), and,
an electronic marketplace (EMP)running a matching algorithm,
wherein a preset electrical power consumption value (ACPV) is allotted and provided by default to each building (B), said value corresponding to a fraction of the provided outside electrical power (OP),
wherein the power supply and consumption by the buildings (B) or users (U), as well as the power distribution within the grid (G), is split temporally and considered by the matching algorithm and by the building power management systems (BPMS) within consecutive timeslots (TS), a building (B) being, for each future timeslot (TSn), either in need of more or of less power than its assigned value (ACPV), or expected to consume approximately said assigned value (ACPV),
wherein the power management systems (BPMS) of the buildings (B) or users (U) which are either able and willing to supply a given amount of excess power to the grid (G) or in need and willing to draw a given amount of lacking power from the grid (G), for at least one given future timeslot (TSn), are designed to elaborate and submit corresponding requests (SR, DR) to electronic marketplace (EMP),
wherein said electronic marketplace (EMP) is designed to automatically handle said demand and supply requests (DR, SR) and to strive to settle power exchange deals between the implied buildings (B) or users (U), preferably at the latest before the end of the timeslot (TSn-1) immediately preceding the concerned timeslot (TSn), by exchanging with the concerned power management systems (BPMS), by making use of the adapted matching algorithm and by taking into consideration, as handling parameters, at least a minimal selling price (MSP) and a maximum buying price (MBP) preset by each connected user (U) and, as imperative limiting conditions, at least the global deliverable power (GDP) of the grid during the considered timeslot (TSn) and a maximum supply limit for each connected user (U), corresponding at least to the physical limit of its connection to the grid (G) and preferably to its preset default allotted consumption power value (ACPV).

Each building power management system (BPMS) comprises means to collect, store and evaluate historical consumption data of the associated building (B), means to compute repeatedly a consumption forecast for said building and to evaluate automatically its potential needs to positively balance its capacity, at least for the next timeslot (TSn), means to elaborate and send demand and supply request (DR, SR) messages and means to cut off selectively some or all loads of the associated building (B), or to trigger adapted cut off means.

According to the invention, the power management systems (BPMS) of the buildings (B) or users (U) may comprise:
- an arrangement wherein the power management systems (BPMS) of the buildings (B) or users (U) comprise means to forecast the power production of electrical power generating device(s) able to exploit (a) natural source(s) of energy at least over the next timeslot (TSn), and/or
- an arrangement wherein each building power management system (BPMS) comprises means to manage the load of the associated building (B) in accordance with the grid stress or the available grid capacity and means to cut off the load generating a power consumption in excess of the preset electrical power consumption value (ACPV) of said building.

In order to facilitate the communication between the power management systems (BPMS)and the electronic marketplace (EMP), each of the messages of demand and supply requests (DR, SR) sent by the concerned power management systems (BPMS) to the electronic marketplace (EMP) comprises at least the following data: identity of the sending power management systems (BPMS), type of request (supply/demand), concerned timeslot (s) (TS), amount of concerned power and selling/buying threshold value.

In accordance with a favorable practical embodiment, the electronic marketplace (EMP) is hosted and run on a computer-based grid managing system (GMS), said system being configured to also continuously check the stress on the grid (G), manage a power reserve (PR) and control the injection into said grid (G) of additional power coming from said power reserve (PR).

Most preferably, the arrangement according to the invention comprises means and is configured and designed to put into practice the method described herein before.

Further optional details, advantages and considerations with respect to some possible aspects of the practical implementation of the invention are described hereinafter, only as nonlimiting illustrative examples, in relation to the attached figures 1 to 5.

The functioning process of the electronic marketplace (EMP), and of the method to manage a local low-voltage electrical power grid which makes use of it, is based on a direct peer-2-peer power trading relying on free and equal trading of grid purchase (DR) and grid feed-in (SR) power units (in fact average constant power values per timeslots: kW/TS, or per fractions of a timeslot) between the grid connected users or buildings in a low-voltage distribution grid. Trading of services/power units across networks (transformers) is excluded, as this does not provide any added value for the stabilization of the network operation. To be able to trade services/power units, they must be owned by the grid access/connected users.

In a practical embodiment, each grid connected user is assigned an allotted average power consumption value associated with its category (single-family house, flat, commercial property, etc.), and called hereinafter the building power. The building power basically depends on the transformer power, cable cross-sections and possibly other limiting factors and is limited upwards by the physical grid connection of the building (main fuse). In the simplest case, the transformer power (e.g., 600 kVA) is divided by the number of buildings behind the transformer (e.g., 110) minus a grid operator share (grid operator power) or power reserve (e.g., 50 kVA). In the above example, this would result in a building power of 5 kVA if only buildings of one category are connected to said grid.

The building power may be drawn from the grid by each grid connected user without restriction. However, if the actual power demand, or demand foreseen for the next timeslot, is greater than the building capacity, the concerned grid connected user must purchase additional capacity on the local electronic marketplace (by means of a demand request DR), unless he reduces its consumption to fall within the limits. The grid connected users who require less than the building power belonging to them (ACPV) act as sellers/suppliers on said local marketplace. Furthermore, a possible grid operator or grid managing system (GMS) can intervene in trading with its grid operator capacity (power reserve), most preferably under clearly regulated conditions.

Constant power packages (average constant power values per timeslots: kW/TS) are traded over a defined period of time (referred to as a time slice or slot in the following, e.g., 5 minutes) and a defined granularity (e.g. 100 VA steps). As far as possible, to ensure a smooth running of the process of the method, trading should be completed before the starting time of the service package, i.e., of the considered timeslot. Accordingly, there is a need for a forward-looking load forecast for each building, including an estimate of the variance, in particular also in order to sufficiently take into account any load/generation deviations before the start of and during the considered timeslot.

If a grid connected user does not have sufficient power because he has purchased too little or no power, he must reduce his consumption at the respective times. Should he draw more than the power he owns from the grid, it could be envisaged for him to be penalized. Here, financial penalties, possibly also depending on the amount of the violation, as well as -in extreme cases- the direct disconnection of his connection can be considered. A certain tolerance of e.g., 5 % can also be considered, up to which no penalty would be imposed.

When feeding power into the grid, grid connected users with their own generation/storage unit(s) must ensure that this power has been sold by them in advance on the local marketplace. Otherwise, the grid feed-in should be prohibited. This power can also be bought by the grid operator or grid managing system (GMS) for free, as long as he/it does not see any overloading of the grid as a result. This ensures that the own produced (for example PV) energy is remunerated and avoids unnecessary deregulation. This means that grid users with a generation or storage unit (e.g. Photovoltaic system) can sell additional power to their building power if they supply power to the grid in the respective period (e.g. PV system generates 7 kVA, of which 3 kVA are fed into the grid - 5 kVA building power plus 3 kVA PV power can now be sold).

An important element of the inventive method and system is the trading process, in relation to the EMP. As already mentioned before, each grid connected user takes over one of the following three roles in each timeslot TS:
1. passive: allotted building power (ACPV) is sufficient for the planned load. Selling power is not possible or not wanted.
2. shortage (active): the allotted/planned building power is not sufficient for the planned load and additional power must be purchased.
3. surplus (active): the grid connected user has more power than he needs and wants to sell the surplus on the marketplace.

If a grid connected user does not have a demand for power in excess of the allotted building power and does not want to or cannot sell a surplus, it acts as a "passive" user in the applicable timeslot. These users do not participate in the trading process.

All other network users participate in the trading process either as "shortage" (demand for power) or as "surplus" (supply of power).

The process steps for trading a power package for a given time slice between grid two connected users are shown in Figure 3. The process shown as well as the necessary simulations and calculations are carried out fully automatically by the Home Power Management Systems (HPMS). The grid user has to set parameters once (e.g., max. price for power purchase, min. price for power sale, ...) to define his preferences. Intervention during operation is not necessary.

The first and greatest advantage of the inventive method, making use of the aforementioned peer-2-peer power trading model, is that overloading of the grid resources and voltage band violations are virtually excluded. It follows the principle that no more power may be drawn from or fed into the grid than the grid "makes available" in the form of building powers.

But also, other advantages can be expected from applying the inventive method as indicated herein below:
- First, grid expansion costs and overloads are avoided.
- In the spirit of the energy transition, the problem is solved decentral by the grid users and not centrally by the grid operator.
- Not only the local energy generation, but also the reduced use of building power is remunerated.
- It leads to a socially fair solution: every grid connected user can participate in the trading process. Grid users with low power consumption can continuously offer power for sale and thus generate revenue.
- Linking with dynamic electricity tariffs is possible without modifying the method. If a user wants to react to a dynamic electricity tariff and, for example, buy a lot of power packages at times when it is cheap so that the building's capacity is exceeded, he will have to buy the corresponding additional capacity (i.e., the possibility to feed it into the grid) in parallel. If this is not the case, he cannot and must not purchase the full amount of cheap electricity.
- For a community, and Society in general, the inventive method and system make the ownership of solar systems, electric vehicles and other private power sources very attractive, as they benefit everyone and not just the owner.
- No grid wide load forecasts are needed (= lower investment and operating costs for the distribution grid operator).
- Trading and compliance with power limits (e.g., 5-minute averages) can be monitored fully automatically.
- The grid operator or grid managing system is predestined to operate the electronic marketplace, monitors its functionality and can intervene in the market with his power reserve.
- It becomes clearly obvious and definable when a network expansion becomes necessary (e.g., when there is more demand for power than supply over a period of time).
- It is possible to maintain existing mechanisms for emergency disconnection of individual consumers without restrictions.

The aim of the present invention is to ensure the stability of low-voltage local distribution grids (i.e. closed/self-contained) under the changed framework conditions, while at the same time making the best possible use of the existing infrastructure. The aim is not to create a trading model for speculation to the detriment of the network users.

To that end, certain regulatory requirements may be envisaged when the method is concretely applied, for example:
- Only one of the three roles can be taken by the same user in each timeslot. No power can be bought and sold in the same timeslot. This prevents possible speculation. However, several transactions of the same type can be carried out per timeslot.
- The maximum amount of power that may be sold is the amount that belongs to you. Short sales or similar are not permitted.
- The maximum amount of power that may be purchased/sold by a user is that which the grid connection point of said user can physically realize/transfer.
- Trading may only take place at the local electric marketplace behind a low-voltage transformer. Trading at several marketplaces is not possible. Arbitrage trading is therefore excluded.
- Trading must preferably be completed before the start of the considered time slice or timeslot TS.
- The marketplace operator must define how many timeslots may be subject to requests and trading in advance.
- The network operator receives clear framework conditions under which he may trade his network operator service/power reserve (e.g., min. and max. sales price; market price from which he must offer service for sale).
- The transactions take place anonymously, so that it is not known who the buyer and seller are. This precaution rules out the possibility of a trade not being concluded between two parties for personal reasons.

Also, in relation to the practical implementation of the inventive method, the question of the amount of building performance arises. Various approaches are conceivable to determine this issue, as for example:
- Distribution of the nominal transformer power
- Determination for the entire grid network on the basis of a network simulation based on a predefined reference scenario with a high simultaneity factor.
- Individual determination for each connected user (cable feeder) on the basis of a network simulation with a predefined reference scenario with a high simultaneity factor.
- Based on empirical values from technical network operation and published research results.

## Claims

1. Method to manage a local low-voltage electrical power grid (G),
wherein said grid (G) is allocated a global deliverable power (GDP) and is connected i) to the secondary of a single transformer (T) dedicated to supply a given maximum amount of outside electrical power (OP) to said grid and ii) to buildings (B) which correspond to respective grid connected end users (U),
wherein a preset electrical power consumption value (ACPV) is allotted and provided by default to each building (B), said value corresponding to a fraction of the provided outside electrical power (OP),
wherein each building (B) comprises a building power management system (BPMS) which is monitoring and controlling the power flows within the considered building (B) and configured to determine the future power needs of the concerned building (B),
wherein the power supply and consumption by the buildings (B) or users (U), as well as the power distribution within the grid (G), is split temporally and considered within consecutive timeslots (TS),
wherein for each future timeslot (TSn) a considered building (B) may be either in need of more or of less power than its assigned value (ACPV), or consume approximately said assigned value (ACPV),
wherein the power management systems (BPMS) of the buildings (B) or users (U) which are either able and willing to supply a given amount of excess power to or in need and willing to draw a given amount.of lacking power from the grid (G), for at least one given future timeslot (TSn), submit corresponding requests (SR, DR) to an electronic marketplace (EMP) associated with the grid (G),
wherein said electronic market place (EMP) handles said demand and supply requests (DR, SR) and strives to settle power exchange deals between the implied buildings (B) or users (U), preferably at the latest before the end of the timeslot (TSn-1) immediately preceding the concerned timeslot (TSn), by exchanging with the concerned power management systems (BPMS), by making use of an adapted matching algorithm and by taking into consideration, as handling parameters, at least, a minimal selling price (MSP) and a maximum buying price (MBP) preset by each connected user (U) and, as imperative limiting conditions, at least the global deliverable power (GDP) of the grid during the considered timeslot (TSn) and a maximum supply limit for each connected user (U), corresponding at least to the physical limit of its connection to the grid (G) and preferably to its preset default allotted consumption power value (ACPV).

2. Method according to claim 1, wherein the objects of the demand and supply requests (DR, SR) are electrical energy items consisting of a power value which is constant over a considered timeslot (TSn), said value being superior to a minimum preset threshold value and each request being preferably limited to a single timeslot or extending over several ensuing timeslots.

3. Method according to claim 1 or 2, wherein each building power management system (BPMS) fulfills automatically the following operations: collecting, storing and evaluating historical consumption data of the associated building (B), computing repeatedly a consumption forecast for said building and evaluating its potential need to positively balance its capacity, at least for the next timeslot (TSn), elaborating and sending demand and supply request (DR, SR) messages and cutting off selectively some or all loads of the associated building (B), or triggering adapted cut off means.

4. Method according to anyone of claims 1 to 3, wherein each building power management system (BPMS) monitors and manages continuously the loads of the associated building (B) with reference to the preset electrical power consumption value (ACPV) of said building (B) and in accordance with i) the issues of the handling of its demand and supply requests (DR, SR) and ii) the current grid stress or the available grid capacity, and cuts off, if necessary, the load(s) generating a power consumption in excess of the preset electrical power consumption value (ACPV) of said building.

5. Method according to anyone of claims 1 to 4, wherein each connected user (U) has, during a considered timeslot (TSn) and with respect to a possible power exchange through the grid (G) within said timeslot, a temporary status as either a passive user or an active user, wherein an active user is with respect to its own situation either a possible supplier of excess power or a possible consumer of lacking power, and wherein the status of each user (U) is updated during each timeslot by the power management systems (BPMS) of the buildings (B) or users (U), the identity of at least each active user (U) remaining anonymous to the other users (U) connected to the grid (G).

6. Method according to anyone of claims 1 to 5, wherein demand and supply requests (DR, SR) for a given timeslot (TSn) can also be sent during said timeslot (TSn) until a predetermined deadline within said timeslot (TSn), the power management system (BPMS) of a given building (B) or user (U) being allowed to send repeatedly demand and supply request (DR, SR) messages to the electronic market place (EMP), with the same or modified handling parameters and indicated power amount, as a result of a repeatedly updated power consumption forecast for the remaining time in said timeslot (TSn), performed by said power management system (BPMS).

7. Method according to anyone of claims 1 to 6, wherein the grid (G) has permanently at its disposal a power reserve (PR), and wherein at least part of said power reserve is selectively injected into the grid (G), for example in order to balance out the grid within a considered timeslot (TSn), when power demand is expected to be higher than power supply within the grid during said timeslot, and when preset injection conditions are met.

8. Method according to claim 7, wherein said power reserve (PR) is managed by a specific power management system (GMS), for example a grid management system (GMS), able to communicate and interact with the electronic market place (EMP), said specific power management system (GMS) sending only supply request (SR) to said electronic market place (EMP) and wherein the combined sum of the power reserve (PR) and of all allotted, electrical power consumption values (ACPV) of the buildings (B) connected to the grid (G) is preferably equal to the outside electrical power (OP) supplied by the secondary of the transformer (T) to said grid (G).

9. Method according to anyone of claims 1 to 8, wherein some supply requests (SR) result from the shifting of effective consumption of at least (a) fraction(s) of allotted power consumption(s) of (a) building(s) (B) from (a) given timeslot(s) to (a) future timeslot(s).

10. Method according to anyone of claims 1 to 9, wherein some supply requests (SR) result at least partly from temporary generation of power by (a) device(s) (PVE) driven by (a) natural source(s) of energy, such as sun, wind and water for example, said source(s) being comprised within, associated with or connected to at least some of the buildings (B), and wherein the power management systems (BPMS) of the concerned buildings (B) forecast the power production(s) of such (a) device(s), at least over the next timeslot (TSn), and integrate it (them) in the capacity forecast of said buildings (B).

11. Method according to claim 10, wherein weather forecast data is provided to and processed at least by the power management system(s) (BPMS) of the building(s) (B) comprising (a) device(s) (PVE) able to exploit (a) natural source(s) of energy, and wherein the results of the processing, which may be mutualized among several buildings, are taken into account for determining the future power needs of the concerned building(s) (B).

12. Method according to anyone of claims 1 to 11, wherein some supply requests (SR) result from the wish of (a) connected user(s) (U) to empty at least partially at least one electricity storage device (ESD) associated to said user(s) (U) and /or located within the concerned building(s) (B), such as for example the battery of an electric car.

13. Method according to anyone of claims 1 to 12, wherein injection into the grid (G) of excess power during a given timeslot (TSn) by a given building (B), under the supervision of its power management system (BPMS), can be implemented only when (a) corresponding power exchange deal(s) ha(s)ve been achieved with (a) building(s) (B) or user(s) (U) needing more power than allotted to it or him during said same timeslot (TSn), and wherein said deal will have been settled preferably at the latest during the timeslot (TSn-1) immediately preceding the concerned timeslot (TSn), and advantageously before the end of said timeslot (TSn-1).

14. Method according to anyone of claims 1 to 13, wherein withdrawal from the grid (G) of lacking power during a given timeslot (TSn) by a given building (B), under the supervision of its power management system (BPMS), is allowed even if no corresponding deal has been timely settled, and thus no counterbalancing injection of excess power during said timeslot (TSn) by another building (B) occurs, due to injection into the grid (G) of power issued from a power reserve (PR) as far as enough power is available from the power reserve (PR) and only in case the power management system (BPMS) of the concerned building (B) has sent a corresponding agreement or in case of an emergency situation with respect o the concerned building (B).

15. Method according to anyone of claims 1 to 14, wherein the buildings (B) or users (U) are divided into differentiated categories, each category being characterized, with respect to the user or building, by the preset electrical power consumption value (ACPV), by the sizing of the connection to the grid (G), by the consumption profile, by the types of connected loads, by the presence or not of electricity storage device, by the presence or not of electrical power generating device(s) able to exploit (a) natural source(s) of energy, by the minimal selling price (MSP) and/or the maximum buying price (MBP), and wherein all users or buildings belonging to the same category are treated in a similar way by the matching algorithm.

16. Method according to anyone of claims 1 to 15, wherein the matching algorithm takes into consideration, when handling demand and supply requests (DR, SR) and striving to settle power exchange deals, as additional parameter(s), at least one, preferably several, parameter(s) among i) the stress level of the grid (G), in terms of differences between power availability and power demand, preferably modelled as a time function of the different days of the week, ii) the consumption profiles of at least some users (U) resulting from the aggregation and evaluation of data collected in relation to past behaviors of said users, iii) local weather forecast and/or iiii) the category of the users or buildings.

17. Method according to claim 15 or 16, wherein power consumption deviations of a user (U) or building (B), with respect to its consumption profile or to the features of its user category, are detected by the associated building power management system (BPMS) and are signaled to the electronic marketplace (EMP) and/or lead to adequate measures, such as a change of category of the concerned user or building.

18. Method according to anyone of claims 1 to 17, wherein the value of the elementary exchangeable power unit, the duration of the timeslots and the maximum number of consecutive future timeslots to be handled in advance are set functional parameters, but which may be modified over time by the matching algorithm if the stress on the grid (G) exceeds a threshold value or if the grid (G) gets unbalanced, or following requests of a sufficient number of users.

19. Method according to anyone of claims 1 to 18, wherein the value of the elementary exchangeable power unit is comprised between 200W and 1000W, preferably between 250W and 500W and wherein the duration of each timeslot (TS) is comprised between 5 minutes and 1 hour, advantageously between 10 min and 30 min, preferably from 15 to 20 min, the value(s) of said elementary power unit and/or of said timeslot (TS) being possibly different between daytime and nighttime, possibly also during periods of the day or the night, or depending dynamically on the number of submitted requests (SR, DR).

20. Method according to anyone of claims 1 to 19, wherein, for a given timeslot (TSn), each building power management system (BPMS) handles, simultaneously, the following tasks: i) management of the current power consumption of the concerned building (B) during said timeslot (TSn), in relation to the allocated power limit set at the end of the immediately preceding timeslot (TSn-1) and possibly adjusted during said current timeslot (TSn), and, ii) forecasting the required average power for said building (B) for the next timeslot (TSn+1) and seeking of securing a corresponding or at least approaching power limit before the end of the current timeslot (TSn), possibly by submitting at least one demand or supply request (DR, SR).

21. Method according to claim 20, wherein task i) mainly comprises: limiting the power consumption of the considered building (B) to the allocated power limit, possibly by taking into account traded power according to demand or supply contract with at least one other user, repeatedly checking, until the end of the current timeslot (TSn), if said limit is respected, and, if not, optimizing the loads and/or the electrical storage or production resources of the building (B) and/or the grid power supply to said building (B) either by submitting a new request (DR, SR), for a remaining fraction of the current timeslot (TSn), or by adapting the loads, if no deal can be formalized in case of additional power demand, or by doing both.

22. Method according to claim 20, wherein task ii) mainly comprises: forecasting the required average power for the building (B) for the next timeslot (TSn+1), optimizing the loads and/or the electrical storage or production resources of the building (B) and/or the grid power supply of said building (B), in terms of user comfort and costs, possibly submitting at least one supply or demand request (SR, DR) and acknowledging the trading result(s)

23. Method according to anyone of claims 1 to 22, wherein each building power management system (BPMS) is, in a preliminary phase, programmed by a corresponding user by means of an adapted user interface, preferably by filling out a preference questionnaire, including comfort and economic parameters choices.

24. Method according to anyone of claims 1 to 23, wherein a power exchange deal between a first active user (U1) in need of additional power during at least one future timeslot (TSn), and willing consumer of said lacking power, and a second active user (U2) having an excess of power available during a least the same timeslot (TSn), and willing supplier of said excess power, comprises the following steps:
- determining by the two respectively involved building power management systems (BPMS) of the amount of lacking or excess power and of the corresponding maximum buying or minimum selling price,
- elaborating the demand or supply requests (DR, SR) and sending them to the electronic marketplace (EMP),
- having said demand request (DR) and said supply request (SR) analyzed by the electronic marketplace (EMP) and submitted to the adapted matching algorithm,
- if no deal is reached within the preset time limit, cancelling both requests (DR and SR) and informing the two users (U1 and U2),
- if a deal is reached within the preset time limit, formalizing the deal by performing/setting the payment procedure between the two users (U1 and U2), preparing the corresponding deed and sending it to the users, verifying the deed and the coverage of the power demand on the side of the first active user (U1), verifying the deed and the coverage of the power supply on the side of the second active user (U2) and finishing the deal if both coverages are confirmed.

25. Self-managing local low-voltage electrical power grid arrangement, comprising
a local low-voltage grid (G), which is allocated a global deliverable power (GDP),
a transformer (T) dedicated to supply a given maximum amount of outside electrical power (OP) to said grid (G),
buildings (B) which correspond to respective end users (U) and are connected to each other and to the secondary of the transformer (T) through the grid (G), each building (B) comprising a building power management system (BPMS) which automatically monitors and controls the power flows of said building, is configured to determine the future power needs of the concerned building (B) and is designed to communicate with an electronic market place (EMP), and,
an electronic marketplace (EMP)running a matching algorithm,
wherein a preset electrical power consumption value (ACPV) is allotted and provided by default to each building (B), said value corresponding to a fraction of the provided outside electrical power (OP),
wherein the power supply and consumption by the buildings (B) or users (U), as well as the power distribution within the grid (G), is split temporally and considered by the matching algorithm and by the building power management systems (BPMS) within consecutive timeslots (TS), a building (B) being, for each future timeslot (TSn), either in need of more or of less power than its assigned value (ACPV), or expected to consume approximately said assigned value (ACPV),
wherein the power management systems (BPMS) of the buildings (B) or users (U) which are either able and willing to supply a given amount of excess power to the grid (G) or in need and willing to draw a given amount of lacking power from the grid (G), for at least one given future timeslot (TSn), are designed to elaborate and submit corresponding requests (SR, DR) to electronic marketplace (EMP),
wherein said electronic marketplace (EMP) is designed to automatically handle said demand and supply requests (DR, SR) and to strive to settle power exchange deals between the implied buildings (B) or users (U), preferably at the latest before the end of the timeslot (TSn-1) immediately preceding the concerned timeslot (TSn), by exchanging with the concerned power management systems (BPMS), by making use of the adapted matching algorithm and by taking into consideration, as handling parameters, at least a minimal selling price (MSP) and a maximum buying price (MBP) preset by each connected user (U) and, as imperative limiting conditions, at least the global deliverable power (GDP) of the grid during the considered timeslot (TSn) and a maximum supply limit for each connected user (U), corresponding at least to the physical limit of its connection to the grid (G) and preferably to its preset default allotted consumption power value (ACPV).

26. Arrangement according to claim 25, wherein each building power management system (BPMS) comprises means to collect, store and evaluate historical consumption data of the associated building (B), means to compute repeatedly a consumption forecast for said building and to evaluate automatically its potential needs to positively balance its capacity, at least for the next timeslot (TSn), means to elaborate and send demand and supply request (DR, SR) messages and means to cut off selectively some or all loads of the associated building (B), or to trigger adapted cut off means

27. Arrangement according to claim 25 or 26, wherein the power management systems (BPMS) of the buildings (B) or users (U) comprise means to forecast the power production of electrical power generating device(s) able to exploit (a) natural source(s) of energy at least over the next timeslot (TSn).

28. Arrangement according to anyone of claims 25 to 27, wherein each building power management system (BPMS) comprises means to manage the load of the associated building (B) in accordance with the grid stress or the available grid capacity and means to cut off the load generating a power consumption in excess of the preset electrical power consumption value (ACPV) of said building.

29. Arrangement according to anyone of claims 25 to 28, wherein each of the messages of demand and supply requests (DR, SR) sent by the concerned power management systems (BPMS) to the electronic marketplace (EMP) comprises at least the following data: identity of the sending power management systems (BPMS), type of request (supply/demand), concerned timeslot (s) (TS), amount of concerned power and selling/buying threshold value.

30. Arrangement according to anyone of claims 25 to 29, wherein the electronic marketplace (EMP) is hosted and run on a computer-based grid managing system (GMS), said system being configured to also continuously check the stress on the grid (G), manage a power reserve (PR) and control the injection into said grid (G) of additional power coming from said power reserve (PR).

31. Arrangement according to anyone of claims 25 to 30, wherein it is configured and designed to put into practice the method according to anyone of claims 1 to 24.

## Patentansprüche

1. Verfahren zum Verwalten eines lokalen Niederspannungsstromnetzes (G),
wobei dem Netz (G) eine global lieferbare Leistung (GDP) zugewiesen wird und es verbunden ist i) mit der Sekundärspule eines einzigen Transformators (T), der zweckbestimmt ist, um das Netz mit einer gegebenen maximalen Menge einer externen elektrischen Leistung (OP) zu versorgen, und ii) mit Gebäuden (B), die den jeweiligen an das Netz angeschlossenen Endbenutzern (U) entsprechen,
wobei ein voreingestellter Stromverbrauchswert (ACPV) zugeteilt wird und standardmäßig jedem Gebäude (B) bereitgestellt wird, wobei der Wert einem Bruchteil der bereitgestellten externen elektrischen Leistung (OP) entspricht,
wobei jedes Gebäude (B) ein Gebäudestromverwaltungssystem (BPMS) umfasst, das die Stromflüsse innerhalb des betrachteten Gebäudes (B) überwacht und steuert und das konfiguriert ist zum Ermitteln des zukünftigen Leistungsbedarfs des betroffenen Gebäudes (B),
wobei die Stromversorgung und der Stromverbrauch durch die Gebäude (B) oder die Benutzer (U) sowie die Leistungsverteilung innerhalb des Netzes (G) zeitweise aufgeteilt wird und innerhalb von aufeinanderfolgenden Zeitschlitzen (TS) betrachtet wird,
wobei ein betrachtetes Gebäude (B) für jeden zukünftigen Zeitschlitz (TSn) entweder einen Bedarf von mehr oder weniger Leistung als seinen zugewiesenen Wert (ACPV) haben kann oder ungefähr den zugewiesenen Wert (ACPV) verbraucht,
wobei die Stromverwaltungssysteme (BPMS) der Gebäude (B) oder der Benutzer (U), die entweder in der Lage sind und dazu bereit sind, eine gegebene Menge einer überschüssigen Leistung zu liefern, oder einen Bedarf haben und dazu bereit sind, eine gegebene Menge einer fehlenden Leistung aus dem Netz (G) während mindestens eines zukünftigen Zeitschlitzes (TSn) zu beziehen, entsprechende Anforderungen (SR, DR) bei einem elektronischen Marktplatz (EMP) einreichen, der mit dem Netz (G) assoziiert ist,
wobei der elektronische Marktplatz (EMP) die Bedarfs- und Lieferanforderungen (DR, SR) bearbeitet und bestrebt ist, sich auf Leistungsaustauschgeschäfte zwischen inbegriffenen Gebäuden (B) oder Benutzern (U), vorzugsweise spätestens vor dem Ende des Zeitschlitzes (TSn-1), der dem betroffenen Zeitschlitz (TSn) unmittelbar vorangeht, zu einigen, indem mit den betroffenen Stromverwaltungssystemen (BPMS), unter Verwendung eines angepassten Abgleichungsalgorithmus und unter Berücksichtigung, als Bearbeitungsparameter, mindestens eines minimalen Verkaufspreises (MSP) und eines maximalen Einkaufspreises (MBP), der von jedem angeschlossenen Benutzer (U) voreingestellt wird, und als imperative Begrenzungsbedingungen mindestens der global lieferbaren Leistung (GDP) des Netzes während des betrachteten Zeitschlitzes (TSn) und eine maximale Liefergrenze für jeden Benutzer (U) ausgetauscht werden, der mindestens der physikalischen Grenze seiner Verbindung mit dem Netz (G) und vorzugsweise seinem voreingestellten standardmäßig zugeteilten Stromverbrauchswert (ACPV) entspricht.

2. Verfahren nach Anspruch 1, wobei die Objekte der Bedarfs- und Lieferanforderungen (DR, SR) Elemente einer elektrischen Energie sind, die aus einem Leistungswert bestehen, der während eines betrachteten Zeitschlitzes (TSn) konstant ist, wobei der Wert größer als ein minimaler voreingestellter Schwellenwert ist, wobei jede Anforderung vorzugsweise auf einen Zeitschlitz begrenzt ist oder sich über mehrere aufeinanderfolgende Zeitschlitze erstreckt.

3. Verfahren nach Anspruch 1 oder 2, wobei jedes Gebäudestromverwaltungssystem (BPMS) die folgenden Operationen automatisch erfüllt: Sammeln, Speichern und Bewerten von Langzeitverbrauchsdaten des assoziierten Gebäudes (B), wiederholtes Berechnen einer Verbrauchsvorhersage für das Gebäude und Bewerten seines potenziellen Bedarfs, um seine Kapazität mindestens für den nächsten Zeitschlitz (TSn) positiv auszugleichen, Ausarbeiten und Senden von Bedarfs- und Lieferanforderungsnachrichten (DR-, SR-Nachrichten) und selektives Abschalten einiger oder aller Lasten des assoziierten Gebäudes (B), oder Triggern von angepassten Abschaltelementen.

4. Verfahren nach einem der Ansprüche 1 bis 3, wobei jedes Gebäudestromverwaltungssystem (BPMS) die Lasten des assoziierten Gebäudes (B) in Bezug auf den voreingestellten Stromverbrauchswert (ACPV) des Gebäudes (B) und gemäß i) den Problemen des Bearbeitens seiner Bedarfs- und Lieferanforderungen (DR, SR) und ii) der aktuellen Netzbelastung oder der verfügbaren Netzkapazität kontinuierlich überwacht und verwaltet, und, falls notwendig, die Last(en) abschaltet, die einen Stromverbrauch erzeugen, der über den voreingestellten Stromverbrauchswert (ACPV) des Gebäudes hinausgeht.

5. Verfahren nach einem der Ansprüche 1 bis 4, wobei jeder angeschlossene Benutzer (U), während eines betrachteten Zeitschlitzes (TSn) und in Bezug auf einen möglichen Leistungsaustausch durch das Netz (G) innerhalb des Zeitschlitzes, einen vorübergehenden Status entweder eines passiven Benutzers oder eines aktiven Benutzers hat, wobei ein aktiver Benutzer in Bezug auf seine eigene Situation entweder ein möglicher Lieferant einer überschüssigen Leistung oder ein möglicher Verbraucher einer fehlenden Leistung ist, und wobei der Status von jedem Benutzer (U) während jedes Zeitschlitzes durch das Stromverwaltungssystem (BPMS) der Gebäude (B) oder der Benutzer (U) aktualisiert wird, wobei die Identität von mindestens einem aktiven Benutzer (U) für die anderen Benutzer (U) anonym bleibt, die an das Netz (G) angeschlossen sind.

6. Verfahren nach einem der Ansprüche 1 bis 5, wobei die Bedarfs- und Lieferanforderungen (DR, SR) für einen gegebenen Zeitschlitz (TSn) auch während des Zeitschlitzes (TSn) bis zu einer vorbestimmten Frist innerhalb des Zeitschlitzes (TSn) gesendet werden können, wobei dem Stromverwaltungssystem (BPMS) eines gegebenen Gebäudes (B) oder Benutzers (U) erlaubt ist, wiederholt Bedarfs- und Lieferanforderungsnachrichten (DR-, SR-Nachrichten) zu dem elektronischen Marktplatz (EMP) mit den gleichen oder modifizierten Bearbeitungsparametern und der gleichen oder modifizierten Leistungsmenge als ein Ergebnis einer wiederholt aktualisierten Stromverbrauchsvorhersage für die verbleibende Zeit in dem Zeitschlitz (TSn) zu senden, die von dem Stromverwaltungssystem (BPMS) durchgeführt wird.

7. Verfahren nach einem der Ansprüche 1 bis 6, wobei das Netz (G) dauerhaft eine Leistungsreserve (PR) zu seiner Verfügung hat, und wobei mindestens ein Teil der Leistungsreserve selektiv in das Netz (G) eingespeist wird, um zum Beispiel das Netz innerhalb eines betrachteten Zeitschlitzes (TSn) auszugleichen, wenn erwartet wird, dass der Leistungsbedarf höher als die Stromversorgung innerhalb des Netzes während des Zeitschlitzes ist und wenn voreingestellte Einspeisebedingungen erfüllt sind.

8. Verfahren nach Anspruch 7, wobei die Leistungsreserve (PR) von einem spezifischen Stromverwaltungssystem (GMS), zum Beispiel einem Netzverwaltungssystem (GMS), verwaltet wird, das in der Lage ist, um mit dem elektronischen Marktplatz (EMP) zu kommunizieren und zu interagieren, wobei das spezifische Stromverwaltungssystem (GMS) nur eine Lieferanforderung (SR) zu dem elektronischen Marktplatz (EMP) sendet und wobei die kombinierte Summe der Leistungsreserve (PR) und von allen zugeteilten Stromverbrauchswerten (ACPV) der Gebäude (B), die an das Netz (G) angeschlossen sind, vorzugsweise gleich der externen elektrischen Leistung (OP) ist, mit der die Sekundärspule des Transformators (T) das Netz (G) versorgt.

9. Verfahren nach einem der Ansprüche 1 bis 8, wobei sich einige Lieferanforderungen (SR) aus dem Verschieben eines tatsächlichen Verbrauchs von mindestens einem Bruchteil (von Bruchteilen) von einem zugeteilten Stromverbrauch (von zugeteilten Stromverbräuchen) eines Gebäudes (mehrerer Gebäude) (B) von einem gegebenen Zeitschlitz (von gegebenen Zeitschlitzen) zu einem zukünftigen Zeitschlitz (zu zukünftigen Zeitschlitzen) ergeben.

10. Verfahren nach einem der Ansprüche 1 bis 9, wobei sich einige Lieferanforderungen (SR) mindestens teilweise aus einer vorübergehenden Erzeugung von Strom durch eine Vorrichtung (Vorrichtungen) (PVE) ergeben, die durch eine natürliche Energiequelle (durch natürliche Energiequellen), die zum Beispiel von Sonne, Wind und Wasser angetrieben werden, wobei die Quelle (Quellen) in mindestens einigen der Gebäude (B) enthalten sind, mit ihnen assoziiert sind oder verbunden sind, und wobei die Stromverwaltungssysteme (BPMS) der betroffenen Gebäude (B) die Stromerzeugung(en) einer derartigen Vorrichtung (von derartigen Vorrichtungen) mindestens über den nächsten Zeitschlitz (TSn) vorhersagen und ihn (sie) in die Kapazitätsvorhersage der Gebäude (B) integrieren.

11. Verfahren nach Anspruch 10, wobei dem Stromverwaltungssystem (den Stromverwaltungssystemen) (BPMS) der Gebäude (B) Wettervorhersagedaten bereitgestellt und von diesen verarbeitet werden, das (die) eine Vorrichtung (Vorrichtungen) (PVE) umfasst (umfassen), die in der Lage ist (sind), eine natürliche Energiequelle (natürliche Energiequellen) auszunutzen, und wobei die Ergebnisse des Verarbeitens, die von mehreren Gebäuden gemeinschaftlich verwendet werden, für ein Ermitteln des zukünftigen Leistungsbedarfs des betroffenen Gebäudes (der betroffenen Gebäude) (B) berücksichtigt werden.

12. Verfahren nach einem der Ansprüche 1 bis 11, wobei sich einige Lieferanforderungen (SR) aus dem Wunsch eines angeschlossenen Benutzers (von angeschlossenen Benutzern) (U) ergeben, mindestens eine Elektrizitätsspeichervorrichtung (ESD), wie zum Beispiel die Batterie eines Elektrofahrzeugs, die mit dem Benutzer (den Benutzern) (U) assoziiert ist und/oder sich innerhalb des betroffenen Gebäudes (der betroffenen Gebäude) (B) befindet, mindestens teilweise zu leeren.

13. Verfahren nach einem der Ansprüche 1 bis 12, wobei eine Einspeisung in das Netz (G) einer überschüssigen Leistung während eines gegebenen Zeitschlitzes (TSn) durch ein gegebenes Gebäude (B), unter der Kontrolle seines Stromverwaltungssystems (BPMS), nur implementiert werden kann, wenn ein entsprechendes Leistungsaustauschgeschäft (entsprechende Leistungsaustauschgeschäfte) mit einem Gebäude (mehreren Gebäuden) (B) oder einem Benutzer (mehreren Benutzern) (U) erzielt wurde, das oder der eine größere Leistung benötigt als ihm während des gleichen Zeitschlitzes (TSn) zugeteilt wurde, und wobei eine Einigung für das Geschäft vorzugsweise spätestens während des Zeitschlitzes (TSn-1), der dem betroffenen Zeitschlitz (TSn) unmittelbar vorangeht, und vorteilhafterweise vor dem Ende des Zeitschlitzes (TSn-1) erreicht wird.

14. Verfahren nach einem der Ansprüche 1 bis 13, wobei ein Abziehen eines fehlenden Stroms aus dem Netz (G) während eines gegebenen Zeitschlitzes (TSn) durch ein gegebenes Gebäude (B) unter der Kontrolle seines Stromverwaltungssystems (BPMS), selbst wenn keine Einigung für ein entsprechendes Geschäft zeitgerecht erzielt wurde und somit keine ausgleichende Einspeisung einer überschüssigen Leistung während des Zeitschlitzes (TSn) durch ein anderes Gebäude (B) erfolgt, aufgrund einer Einspeisung in das Netz (G) einer Leistung, aus einer Leistungsreserve (PR), solange eine ausreichende Leistung aus der Leistungsreserve (PR) zur Verfügung steht und nur in dem Fall, in dem das Stromverwaltungssystem (BPMS) des betroffenen Gebäudes (B) eine entsprechende Vereinbarung gesendet hat oder in dem Fall einer Notfallsituation in Bezug auf das betroffene Gebäude (B), erlaubt ist.

15. Verfahren nach einem der Ansprüche 1 bis 14, wobei die Gebäude (B) oder die Benutzer (U) in differenzierte Kategorien aufgeteilt werden, wobei jede Kategorie in Bezug auf den Benutzer oder das Gebäude durch den voreingestellten Stromverbrauchswert (ACPV) charakterisiert wird: durch die Dimensionierung der Verbindung mit dem Netz (G); durch das Verbrauchsprofil, durch den Typ der angeschlossenen Lasten; durch das Vorhandensein oder die Abwesenheit einer Elektrizitätsspeichervorrichtung; durch das Vorhandensein oder die Abwesenheit einer Stromerzeugungsvorrichtung (von Stromerzeugungsvorrichtungen), die in der Lage ist (sind), eine natürliche Energiequelle (natürliche Energiequellen) auszunutzen; durch den minimalen Verkaufspreis (MSP) und/oder den maximalen Einkaufspreis (MBP), und wobei alle Benutzer oder Gebäude, die zu der gleichen Kategorie gehören, durch den Abgleichungsalgorithmus in einer ähnlichen Weise behandelt werden.

16. Verfahren nach einem der Ansprüche 1 bis 15, wobei der Abgleichungsalgorithmus, wenn er Bedarfs- und Lieferanforderungen (DR, SR) bearbeitet und bestrebt ist, sich auf Leistungsaustauschgeschäfte zu einigen, als zusätzliche(n) Parameter mindestens einen, vorzugsweise mehrere, Parameter berücksichtigt von: i) einem Belastungsgrad des Netzes (G) hinsichtlich von Differenzen zwischen der Leistungsverfügbarkeit und dem Leistungsbedarf, der vorzugsweise als eine Zeitfunktion der verschiedenen Wochentage modelliert ist, ii) den Verbrauchsprofilen von mindestens einigen Benutzern (U), die sich aus der Ansammlung und Bewertung von Daten ergeben, die in Bezug auf vorherige Verhaltensweisen der Benutzer gesammelt wurden, iii) einer lokalen Wettervorhersage und/oder iiii) der Kategorie der Benutzer oder der Gebäude.

17. Verfahren nach Anspruch 15 oder 16, wobei die Leistungsverbrauchsabweichungen eines Benutzers (u) oder eines Gebäudes (B) in Bezug auf sein Verbrauchsprofil oder auf die Merkmale seiner Benutzerkategorie durch das assoziierte Gebäudestromverwaltungssystem (BPMS) erkannt werden und zu dem elektronischen Marktplatz (EMO) signalisiert werden und/oder zu adäquaten Maßnahmen, wie zum Beispiel einer Veränderung der Kategorie des betroffenen Benutzers oder des betroffenen Gebäudes führen.

18. Verfahren nach einem der Ansprüche 1 bis 17, wobei der Wert der grundlegenden austauschbaren Leistungseinheit, die Dauer der Zeitschlitze und die maximale Anzahl von aufeinanderfolgenden zukünftigen Zeitschlitzen, die im Voraus bearbeitet werden, eingestellte funktionelle Parameter sind, die aber im Laufe der Zeit durch den Abgleichungsalgorithmus modifiziert werden können, wenn die Auslastung des Netzes (G) einen Schwellenwert überschreitet oder wenn das Netz (G) aus dem Gleichgewicht gerät oder als Folge von Anforderungen einer ausreichenden Anzahl von Benutzern.

19. Verfahren nach einem der Ansprüche 1 bis 18, wobei der Wert der grundlegenden austauschbaren Leistungseinheit zwischen 200W und 1000W, vorzugsweise zwischen 250W und 500W liegt und wobei die Dauer von jedem Zeitschlitz (TS) zwischen 5 Minuten und 1 Stunde, vorteilhafterweise zwischen 10 Minuten und 30 Minuten, vorzugsweise zwischen 15 Minuten und 20 Minuten liegt, wobei der Wert (die Werte) der grundlegenden Leistungseinheit während des Zeitschlitzes (TSn) und/oder des Zeitschlitzes (TS) möglicherweise zwischen einer Tageszeit und einer Nachtzeit unterschiedlich sind, möglicherweise auch während Zeiträumen des Tages oder der Nacht unterschiedlich sind oder dynamisch von der Anzahl von eingereichten Anforderungen (SR, DR) abhängig sind.

20. Verfahren nach einem der Ansprüche 1 bis 19, wobei jedes Gebäudestromverwaltungssystem (BPMS), für einen gegebenen Zeitschlitz (TSn), die folgenden Aufgaben gleichzeitig, bearbeitet: i) Verwaltung des aktuellen Stromverbrauchs des betroffenen Gebäudes (B) während des Zeitschlitzes (TSn) in Bezug auf die zugewiesene Leistungsgrenze, die am Ende des unmittelbar vorangehenden Zeitschlitzes (TSn-1) eingestellt wird und möglicherweise während des Zeitschlitzes (TSn) angepasst wird, und ii) eine Vorhersage der benötigten durchschnittlichen Leistung für das Gebäude (B) für den nächsten Zeitschlitz (TSn+1) und Anstreben eines Sicherstellens einer entsprechenden Leistungsgrenze oder mindestens eines Annäherns an die Leistungsgrenze vor dem Ende des aktuellen Zeitschlitzes (TSn), indem möglicherweise mindestens eine Bedarfs- und Lieferanforderung (DR, SR) eingereicht wird.

21. Verfahren nach Anspruch 20, wobei die Aufgabe i) hauptsächlich umfasst: Begrenzen des Stromverbrauchs des betrachteten Gebäudes (B) auf die zugewiesene Leistungsgrenze, indem möglicherweise eine gehandelte Leistung gemäß einem Bedarfs- oder Liefervertrag mit mindestens einem anderen Benutzer berücksichtigt wird, wiederholtes Prüfen, bis zum Ende des Zeitschlitzes (TSn), ob die Grenze respektiert wird und, falls nicht, Optimieren der Lasten und/oder der elektrischen Speicher- oder Erzeugungsressourcen des Gebäudes (B) und/oder der Stromversorgung des Netzes für das Gebäude (B), indem entweder eine neue Anforderung (DR, SR) für einen verbleibenden Bruchteil des aktuellen Zeitschlitzes (TSn) eingereicht wird, oder indem die Lasten angepasst werden, wenn im Fall eines zusätzlichen Leistungsbedarfs kein Geschäft formalisiert werden kann, oder indem beides ausgeführt wird.

22. Verfahren nach Anspruch 20, wobei die Aufgabe ii) hauptsächlich umfasst: Vorhersagen der benötigten durchschnittlichen Leistung für das Gebäude (B) für den nächsten Zeitschlitz (TSn+1), Optimieren der Lasten und/oder der elektrischen Speicher- oder Erzeugungsressourcen des Gebäudes (B) und/oder der Stromversorgung des Netzes für das Gebäude (B), hinsichtlich eines Benutzerkomforts und der Kosten, indem möglicherweise mindestens eine Bedarfs- und Lieferanforderung (DR, SR) eingereicht wird, und Bestätigen des Handelsergebnisses (der Handelsergebnisse)

23. Verfahren nach einem der Ansprüche 1 bis 22, wobei jedes Gebäudestromverwaltungssystem (BPMS) in einer vorbereitenden Phase von einem entsprechenden Benutzer mithilfe einer angepassten Benutzeroberfläche programmiert wird, indem vorzugsweise ein Präferenzfragebogen ausgefüllt wird, der die Wahl von Komfortparametern und wirtschaftlichen Parametern beinhaltet.

24. Verfahren nach einem der Ansprüche 1 bis 23, wobei ein Leistungsaustauschgeschäft zwischen einem ersten aktiven Benutzer (U1), der einen Bedarf an einer zusätzlichen Leistung während mindestens eines zukünftigen Zeitschlitzes (TSn) hat und ein bereitwilliger Verbraucher der fehlenden Leistung ist, und einem zweiten aktiven Benutzer (U2), der einen verfügbaren Leistungsüberschuss während mindestens eines Zeitschlitzes (TSn) aufweist und ein bereitwilliger Lieferant der überschüssigen Leistung ist, die folgenden Schritte umfasst:
- Ermitteln durch die beiden jeweils involvierten Gebäudestromverwaltungssysteme (BPMS) der Menge an fehlender oder überschüssiger Leistung und des entsprechenden maximalen Einkaufspreises und des minimalen Verkaufspreises,
- Ausarbeiten der Bedarfs- und Lieferanforderung (DR, SR) und Senden derselben zu dem elektronischen Marktplatz (EMP),
- Analysieren lassen der Bedarfsanforderung (DR) und der Lieferanforderung (SR) durch den elektronischen Marktplatz (EMP) und Einreichen lassen in den angepassten Abgleichungsalgorithmus,
- wenn innerhalb der voreingestellten Zeitdauer kein Geschäft abgeschlossen wird, Löschen beider Anforderungen (DR und SR) und Informieren der beiden Benutzer (U1 und U2),
- wenn innerhalb der voreingestellten Zeitdauer ein Geschäft abgeschlossen wird, Formalisieren des Geschäfts, indem der Zahlungsprozess zwischen den beiden Benutzern (U1 und U2) durchgeführt/eingestellt wird, Vorbereiten der entsprechenden Handlung und Senden derselben zu den Benutzern, Überprüfen der Handlung und der Abdeckung des Leistungsbedarfs auf der Seite des ersten aktiven Benutzers (U1), Überprüfen der Handlung und der Abdeckung der Stromversorgung auf der Seite des zweiten aktiven Benutzers (U2) und Abschließen des Geschäfts, wenn beide Abdeckungen bestätigt sind.

25. Selbstverwaltende lokale Niederspannungsstromnetzanordnung, umfassend
ein lokales Niederspannungsnetz (G), dem eine global lieferbare Leistung (GDP) zugewiesen wird,
einen Transformator (T), der zweckbestimmt ist, um das Netz (G) mit einer gegebenen maximalen Menge einer externen elektrischen Leistung (OP) zu versorgen,
Gebäude (B), die den jeweiligen Endbenutzern (U) entsprechen und miteinander und mit der Sekundärspule des Transformators (T) durch das Netz (G) verbunden sind, wobei jedes Gebäude (B) ein Gebäudestromverwaltungssystem (BPMS) umfasst, das die Stromflüsse des Gebäudes automatisch überwacht und steuert und konfiguriert ist zum Ermitteln des zukünftigen Leistungsbedarfs des betroffenen Gebäudes (B) und das dafür vorgesehen ist, um mit einem elektronischen Marktplatz (EMP) zu kommunizieren, und,
einen elektronischen Marktplatz (EMP), in dem ein Abgleichungsalgorithmus ausgeführt wird,
wobei ein voreingestellter Stromverbrauchswert (ACPV) zugeteilt wird und standardmäßig jedem Gebäude (B) bereitgestellt wird, wobei der Wert einem Bruchteil der bereitgestellten externen elektrischen Leistung (OP) entspricht,
wobei die Stromversorgung und der Stromverbrauch durch die Gebäude (B) oder die Benutzer (U) sowie die Stromverteilung innerhalb des Netzes (G) zeitweise aufgeteilt werden und von dem Abgleichungsalgorithmus und von den Gebäudestromverwaltungssystemen (BPMS) innerhalb von aufeinanderfolgenden Zeitschlitzen (TS) betrachtet werden, wobei ein Gebäude (B), für jeden zukünftigen Zeitschlitz (TSn) entweder einen Bedarf für eine größere oder eine geringere Leistung als ein ihm zugewiesener Wert (ACPV) hat oder wobei erwartet wird, dass es ungefähr den zugewiesenen Wert (ACPV) verbraucht,
wobei die Stromverwaltungssysteme (BPMS) der Gebäude (B) oder der Benutzer (U), die entweder in der Lage sind und dazu bereit sind, das Netz mit einer gegebenen Menge einer überschüssigen Leistung zu versorgen, oder einen Bedarf haben und dazu bereit sind, eine gegebene Menge einer fehlenden Leistung aus dem Netz (G) während mindestens eines zukünftigen Zeitschlitzes (TSn) zu beziehen, dafür vorgesehen sind, entsprechende Anforderungen (SR, DR) auszuarbeiten und bei einem elektronischen Marktplatz (EMP) einzureichen,
wobei der elektronische Marktplatz (EMP) dafür vorgesehen ist, die Bedarfs- und Lieferanforderungen (DR, SR) automatisch zu bearbeiten und dazu bestrebt ist, sich auf Leistungsaustauschgeschäfte zwischen inbegriffenen Gebäuden (B) oder Benutzern (U), vorzugsweise spätestens vor dem Ende des Zeitschlitzes (TSn-1), der dem betroffenen Zeitschlitz (TSn) unmittelbar vorangeht, zu einigen, indem mit den betroffenen Stromverwaltungssystemen (BPMS), unter Verwendung des angepassten Abgleichungsalgorithmus und unter Berücksichtigung, als Bearbeitungsparameter, mindestens eines minimalen Verkaufspreises (MSP) und eines maximalen Einkaufspreises (MBP), der von jedem angeschlossenen Benutzer (U) voreingestellt wird, und als imperative Begrenzungsbedingungen mindestens der global lieferbaren Leistung (GDP) des Netzes während des betrachteten Zeitschlitzes (TSn) und eine maximale Liefergrenze für jeden Benutzer (U) ausgetauscht werden, der mindestens der physikalischen Grenze seiner Verbindung mit dem Netz (G) und vorzugsweise seinem voreingestellten standardmäßig zugeteilten Stromverbrauchswert (ACPV) entspricht.

26. Anordnung nach Anspruch 25, wobei jedes Gebäudestromverwaltungssystem (BPMS) umfasst: Elemente zum Sammeln, Speichern und Bewerten von Langzeitverbrauchsdaten des assoziierten Gebäudes (B); Elemente zum wiederholten Berechnen einer Verbrauchsvorhersage für das Gebäude und zum automatischen Bewerten seines potenziellen Bedarfs, um seine Kapazität mindestens für den nächsten Zeitschlitz (TSn) positiv auszugleichen; Elemente zum Ausarbeiten und Senden von Bedarfs- und Lieferanforderungsnachrichten (DR-, SR-Nachrichten); und Elemente zum selektiven Abschalten einiger oder aller Lasten des assoziierten Gebäudes (B), oder zum Triggern von angepassten Abschaltelementen.

27. Anordnung nach Anspruch 25 oder 26, wobei die Stromverwaltungssysteme (BPMS) der Gebäude (B) oder der Benutzer (U) Elemente zum Vorhersagen der Energieerzeugung von einer Stromerzeugungsvorrichtung (Stromerzeugungsvorrichtungen), die in der Lage ist (sind), eine natürliche Energiequelle (natürliche Energiequellen) mindestens während des nächsten Zeitschlitzes (TSn) auszunutzen.

28. Anordnung nach einem der Ansprüche 25 bis 27, wobei jedes Gebäudestromverwaltungssystem (BPMS) Elemente zum Verwalten der Last des assoziierten Gebäudes (B) gemäß der Netzauslastung oder der verfügbaren Netzkapazität und Elemente zum Abschalten der Last umfasst, die einen Stromverbrauch erzeugt, der über den voreingestellten Stromverbrauchswert (ACPV) des Gebäudes hinausgeht.

29. Anordnung nach einem der Ansprüche 25 bis 28, wobei jede der Nachrichten der Bedarfs- und Lieferanforderung (DR, SR), die von dem betroffenen Stromverwaltungssystem (BPMS) zu dem elektronischen Marktplatz (EMP) gesendet werden, mindestens einige der folgenden Daten umfassen: eine Identität des sendenden Stromverwaltungssystems (BPMS), einen Typ der Anforderung (Lieferung/Bedarf), einen betroffenen Zeitschlitz (betroffene Zeitschlitze) (TS), eine Menge der betroffenen Leistung und einen Verkaufs-/Einkaufsschwellenwert.

30. Anordnung nach einem der Ansprüche 25 bis 29, wobei der elektronische Marktplatz (EMP) in einem computergestützten Netzverwaltungssystem (GMS) untergebracht ist und ausgeführt wird, wobei das System konfiguriert ist, um die Auslastung in dem Netz (G) auch kontinuierlich zu prüfen, um eine Stromreserve (PR) zu verwalten, und um eine Einspeisung eines zusätzlichen Stroms, der von der Stromreserve (PR) kommt, in das Netz (G) zu steuern.

31. Anordnung nach einem der Ansprüche 25 bis 30, wobei sie konfiguriert und vorgesehen ist, um das Verfahren nach einem der Ansprüche 1 bis 24 in die Praxis umzusetzen.

## Revendications

1. Procédé de gestion d'un réseau électrique local basse tension (G),
dans lequel ledit réseau (G) se voit attribuer une puissance distribuable globale (GDP) et est connecté i) au secondaire d'un transformateur unique (T) dédié à fournir une quantité maximale donnée d'énergie électrique extérieure (OP) audit réseau et ii) aux bâtiments (B) qui correspondent à des utilisateurs finaux connectés au réseau respectifs (U),
dans lequel une valeur de consommation électrique prédéterminée (ACPV) est attribuée et fournie par défaut à chaque bâtiment (B), cette valeur correspondant à une fraction de la puissance électrique extérieure fournie (OP),
dans lequel chaque bâtiment (B) comprend un système de gestion de l'énergie du bâtiment (BPMS) qui surveille et contrôle les flux d'énergie à l'intérieur du bâtiment considéré (B) et est configuré pour déterminer les besoins futurs en énergie du bâtiment concerné (B),
dans lequel l'alimentation et la consommation d'énergie des bâtiments (B) ou des utilisateurs (U), ainsi que la distribution d'énergie au sein du réseau (G), sont réparties temporellement et prises en compte dans des créneaux temporels consécutifs (TS),
dans lequel, pour chaque créneau temporel futur (TSn), un bâtiment considéré (B) peut avoir besoin d'une puissance supérieure ou inférieure à sa valeur attribuée (ACPV), ou consommer approximativement ladite valeur attribuée (ACPV),
dans lequel les systèmes de gestion de l'énergie (BPMS) des bâtiments (B) ou des utilisateurs (U) qui sont capables et désireux de fournir une quantité donnée d'énergie excédentaire au réseau ou qui en ont besoin et qui sont désireux de tirer une quantité donnée d'énergie manquante du réseau (G), pour au moins un futur créneau temporel donné (TSn), soumettent des demandes correspondantes (SR, DR) à une place de marché électronique (EMP) associée au réseau (G),
où ladite place de marché électronique (EMP) traite lesdites demandes de demande et d'offre (DR, SR) et s'efforce de régler des transactions d'échange d'électricité entre les bâtiments (B) ou les utilisateurs (U) impliqués, de préférence au plus tard avant la fin du créneau temporel (TSn-1) précédant immédiatement le créneau temporel concerné (TSn), en échangeant avec les systèmes de gestion d'énergie concernés (BPMS), en utilisant un algorithme de correspondance adapté et en prenant en considération, comme paramètres de traitement, au moins, un prix de vente minimal (MSP) et un prix d'achat maximal (MBP) prédéfinis par chaque utilisateur connecté (U) et, comme conditions de limitation impératives, au moins la puissance distribuable globale (GDP) du réseau pendant le créneau temporel considéré (TSn) et une limite d'offre maximale pour chaque utilisateur connecté (U), correspondant au moins à la limite physique de sa connexion au réseau (G) et de préférence à sa valeur de puissance de consommation attribuée par défaut prédéfinie (ACPV).

2. Procédé selon la revendication 1, dans lequel les objets des demandes de demande et d'offre (DR, SR) sont des éléments d'énergie électrique constitués d'une valeur de puissance constante sur un créneau temporel considéré (TSn), ladite valeur étant supérieure à une valeur seuil minimale prédéfinie et chaque demande étant de préférence limitée à un créneau temporel unique ou s'étendant sur plusieurs créneaux temporels consécutifs.

3. Procédé selon la revendication 1 ou la revendication 2, dans lequel chaque système de gestion d'énergie de bâtiment (BPMS) exécute automatiquement les opérations suivantes : la collecte, le stockage et l'évaluation de données historiques de consommation du bâtiment associé (B), le calcul répété d'une prévision de consommation pour ledit bâtiment et l'évaluation de son besoin potentiel d'équilibrer positivement sa capacité, au moins pour le prochain créneau temporel (TSn), l'élaboration et l'envoi de messages de demande et d'offre (DR, SR) et la coupure sélective de tout ou partie des charges du bâtiment associé (B), ou le déclenchement de moyens de coupure adaptés.

4. Procédé selon l'une quelconque des revendications 1 à 3, dans lequel chaque système de gestion d'énergie de bâtiment (BPMS) surveille et gère en continu les charges du bâtiment associé (B) en référence à la valeur de consommation d'énergie électrique prédéfinie (ACPV) dudit bâtiment (B) et conformément i) aux problèmes de traitement de ses demandes de demande et d'offre (DR, SR) et ii) à la contrainte actuelle du réseau ou à la capacité disponible du réseau, et coupe, si nécessaire, les une ou plusieurs charges générant une consommation d'énergie supérieure à la valeur de consommation d'énergie électrique prédéfinie (ACPV) dudit bâtiment.

5. Procédé selon l'une quelconque des revendications 1 à 4, dans lequel chaque utilisateur connecté (U) a, pendant un créneau temporel considéré (TSn) et par rapport à un échange possible de puissance à travers le réseau (G) dans ledit créneau temporel, un état temporaire en tant qu'utilisateur passif ou utilisateur actif, dans lequel un utilisateur actif est par rapport à sa propre situation soit un fournisseur possible de puissance excédentaire, soit un consommateur possible de puissance manquante, et dans lequel le statut de chaque utilisateur (U) est mis à jour pendant chaque créneau temporel par les systèmes de gestion d'énergie (BPMS) des bâtiments (B) ou des utilisateurs (U), l'identité d'au moins chaque utilisateur actif (U) restant anonyme pour les autres utilisateurs (U) connectés au réseau (G).

6. Procédé selon l'une quelconque des revendications 1 à 5, dans lequel des demandes de demande et d'offre (DR, SR) pour un créneau temporel donné (TSn) peuvent également être envoyées pendant ledit créneau temporel (TSn) jusqu'à une échéance prédéterminée dans ledit créneau temporel (TSn), le système de gestion d'énergie (BPMS) d'un bâtiment donné (B) ou d'un utilisateur (U) étant autorisé à envoyer de manière répétée des messages de demande et d'offre (DR, SR) à la place de marché électronique (EMP), avec des paramètres de traitement et une quantité de puissance indiquée identiques ou modifiés, en conséquence d'une prévision de consommation d'énergie mise à jour de manière répétée pour le temps restant dans ledit créneau temporel (TSn), effectuée par ledit système de gestion d'énergie (BPMS).

7. Procédé selon l'une quelconque des revendications 1 à 6, dans lequel le réseau (G) dispose en permanence d'une réserve de puissance (PR), et dans lequel au moins une partie de ladite réserve de puissance est sélectivement injectée dans le réseau (G), par exemple afin d'équilibrer le réseau dans un créneau temporel considéré (TSn), lorsque la demande de puissance est supposée être supérieure à l'alimentation dans le réseau pendant ledit créneau temporel, et lorsque des conditions d'injection prédéterminées sont satisfaites.

8. Procédé selon la revendication 7, dans lequel ladite réserve de puissance (PR) est gérée par un système de gestion d'énergie spécifique (GMS), par exemple un système de gestion de réseau (GMS), capable de communiquer et d'interagir avec la place de marché électronique (EMP), ledit système de gestion d'énergie spécifique (GMS) n'envoyant qu'une demande d'offre (SR) à ladite place de marché électronique (EMP) et dans lequel la somme combinée de la réserve de puissance (PR) et de toutes les valeurs de consommation d'énergie électrique allouées (ACPV) des bâtiments (B) connectés au réseau (G) sont de préférence égales à la puissance électrique extérieure (OP) fournie par le secondaire du transformateur (T) audit réseau (G).

9. Procédé selon l'une quelconque des revendications 1 à 8, dans lequel certaines demandes d'offre (SR) résultent du décalage de la consommation effective d'au moins (a) une ou plusieurs fractions des une ou plusieurs consommations d'énergie allouées de (a) de un ou plusieurs bâtiments (B) de (a) un ou plusieurs créneaux temporels donnés à (a) un ou plusieurs créneaux temporels futurs.

10. Procédé selon l'une quelconque des revendications 1 à 9, dans lequel certaines demandes d'offre (SR) résultent au moins en partie de la génération temporaire d'énergie par (a) un ou plusieurs dispositifs (PVE) pilotés par (a) une ou plusieurs sources naturelles d'énergie, telles que le soleil, le vent et l'eau par exemple, lesdites une ou plusieurs sources étant comprises dans, associées ou connectées à au moins certains des bâtiments (B), et où les systèmes de gestion d'énergie (BPMS) des bâtiments concernés (B) prévoient les une ou plusieurs productions d'énergie d'un ou plusieurs tels (a) dispositifs, au moins lors du prochain créneau temporel (TSn), et les intègrent dans la prévision de capacité desdits bâtiments (B).

11. Procédé selon la revendication 10, dans lequel des données de prévisions météorologiques sont fournies et traitées au moins par les un ou plusieurs systèmes de gestion d'énergie (BPMS) des un ou plusieurs bâtiments (B) comprenant (a) un ou plusieurs dispositifs (PVE) aptes à exploiter (a) une ou plusieurs sources naturelles d'énergie, et dans lequel les résultats du traitement, qui peuvent être mutualisés entre plusieurs bâtiments, sont pris en compte pour déterminer les besoins futurs en puissance des un ou plusieurs bâtiments concernés (B).

12. Procédé selon l'une quelconque des revendications 1 à 11, dans lequel certaines demandes d'offre (SR) résultent de la volonté d'un ou plusieurs utilisateurs connectés (U) de vider au moins partiellement au moins un dispositif de stockage d'électricité (ESD) associé audit ou auxdits utilisateurs (U) et/ou situé dans les un ou plusieurs bâtiments concernés (B), comme par exemple la batterie d'une voiture électrique.

13. Procédé selon l'une quelconque des revendications 1 à 12, dans lequel l'injection dans le réseau (G) de puissance excédentaire pendant un créneau temporel donné (TSn) par un bâtiment donné (B), sous la supervision de son système de gestion d'énergie (BPMS), ne peut être mise en œuvre que lorsque (a) les une ou plusieurs transactions d'échange de puissance correspondantes ont été réalisées avec (a) un ou plusieurs bâtiments (B) ou utilisateurs (U) nécessitant plus de puissance que celle allouée pendant ledit même créneau temporel (TSn), et dans lequel ladite transaction aura été réglée de préférence au plus tard pendant le créneau temporel (TSn-1) précédant immédiatement le créneau temporel concerné (TSn), et avantageusement avant la fin dudit créneau temporel (TSn-1).

14. Procédé selon l'une quelconque des revendications 1 à 13, dans lequel le retrait du réseau (G) d'un manque de puissance pendant un créneau temporel donné (TSn) par un bâtiment donné (B), sous la supervision de son système de gestion d'énergie (BPMS), est autorisé même si aucune transaction correspondante n'a été réglée en temps opportun, ainsi, il n'y a pas d'injection compensatrice de puissance excédentaire pendant ledit créneau temporel (TSn) par un autre bâtiment (B) du fait de l'injection dans le réseau (G) de puissance provenant d'une réserve de marche (PR), dans la mesure où la puissance disponible de la réserve de marche (PR) est suffisante et uniquement si le système de gestion d'énergie (BPMS) du bâtiment concerné (B) a envoyé un accord correspondant, ou en cas d'urgence par rapport au bâtiment concerné (B).

15. Procédé selon l'une quelconque des revendications 1 à 14, dans lequel les bâtiments (B) ou les utilisateurs (U) sont divisés en catégories différenciées, chaque catégorie étant caractérisée, en ce qui concerne l'utilisateur ou le bâtiment, par la valeur de consommation électrique prédéterminée (ACPV), par le dimensionnement de la connexion au réseau (G), par le profil de consommation, par les types de charges connectées, par la présence ou non d'un accumulateur d'électricité, par la présence ou non de dispositifs de production d'énergie électrique capables d'exploiter une ou plusieurs sources naturelles d'énergie, par le prix de vente minimal (MSP) et/ou le prix d'achat maximal (MBP), et où tous les utilisateurs ou bâtiments appartenant à une même catégorie sont traités de manière similaire par l'algorithme d'appariement.

16. Procédé selon l'une quelconque des revendications 1 à 15, dans lequel l'algorithme d'adaptation prend en considération, lors du traitement des demandes de demande et d'offre (DR, SR) et de la volonté de régler des transactions d'échange d'énergie, au moins un paramètre, de préférence plusieurs, parmi i) le niveau de contrainte du réseau (G), en termes de différences entre disponibilité d'énergie et demande d'énergie, de préférence modélisées en fonction du temps des différents jours de la semaine, ii) les profils de consommation d'au moins certains utilisateurs (U) résultant de l'agrégation et de l'évaluation des données collectées en relation avec les comportements passés desdits utilisateurs, iii) les prévisions météorologiques locales et/ou iiii) la catégorie des utilisateurs ou des bâtiments.

17. Procédé selon la revendication 15 ou la revendication 16, dans lequel des écarts de consommation d'énergie d'un utilisateur (U) ou d'un bâtiment (B), par rapport à son profil de consommation ou aux caractéristiques de sa catégorie d'utilisateur, sont détectés par le système de gestion d'énergie du bâtiment associé (BPMS) et sont signalés à la place de marché électronique (EMP) et/ou conduisent à des mesures adéquates, telles qu'un changement de catégorie de l'utilisateur ou du bâtiment concerné.

18. Procédé selon l'une quelconque des revendications 1 à 17, dans lequel la valeur de l'unité de puissance échangeable élémentaire, la durée des créneaux temporels et le nombre maximal de créneaux temporels futurs consécutifs à traiter à l'avance sont des paramètres fonctionnels fixés, mais qui peuvent être modifiés dans le temps par l'algorithme d'adaptation si la contrainte sur le réseau (G) dépasse une valeur seuil ou si le réseau (G) est déséquilibré, ou suite à des demandes d'un nombre suffisant d'utilisateurs.

19. Procédé selon l'une quelconque des revendications 1 à 18, dans lequel la valeur de l'unité de puissance élémentaire échangeable est comprise entre 200 W et 1000 W, de préférence entre 250 W et 500 W et dans lequel la durée de chaque créneau temporel (TS) est comprise entre 5 minutes et 1 heure, avantageusement entre 10 min et 30 min, de préférence entre 15 et 20 min, les une ou plusieurs valeurs de ladite unité de puissance élémentaire et/ou dudit créneau temporel (TS) étant éventuellement différentes entre le jour et la nuit, peut-être aussi pendant les périodes de la journée ou de la nuit, ou en fonction dynamiquement du nombre de demandes soumises (SR, DR).

20. Procédé selon l'une quelconque des revendications 1 à 19, dans lequel, pour un créneau temporel donné (TSn), chaque système de gestion d'énergie de bâtiment (BPMS) gère simultanément les tâches suivantes : i) la gestion de la consommation d'énergie courante du bâtiment concerné (B) pendant ledit créneau temporel (TSn), par rapport à la limite de puissance allouée fixée à la fin du créneau temporel immédiatement précédent (TSn-1) et éventuellement ajustée pendant ledit créneau temporel courant (TSn), et ii) la prévision de la puissance moyenne requise pour ledit bâtiment (B) pour le prochain créneau temporel (TSn+1) et la recherche de l'obtention d'une limite de puissance correspondante ou au moins s'en approchant avant la fin du créneau temporel courant (TSn), éventuellement en soumettant au moins une demande de demande ou d'offre (DR, SR).

21. Procédé selon la revendication 20, dans lequel la tâche i) comprend principalement : la limitation de la consommation d'énergie du bâtiment considéré (B) à la limite de puissance allouée, éventuellement en tenant compte de la puissance échangée selon un contrat de demande ou d'offre avec au moins un autre utilisateur, la vérification répétée, jusqu'à la fin du créneau temporel courant (TSn), si ladite limite est respectée, et, dans le cas contraire, l'optimisation des charges et/ou des ressources de stockage ou de production électrique du bâtiment (B) et/ou l'alimentation électrique du réseau de ce bâtiment (B) soit en soumettant une nouvelle demande (DR, SR), pour une fraction restante du créneau temporel courant (TSn), soit en adaptant les charges, si aucune transaction ne peut être formalisée en cas de demande d'énergie supplémentaire, soit en faisant les deux.

22. Procédé selon la revendication 20, dans lequel la tâche ii) comprend principalement : la prévision de la puissance moyenne requise pour le bâtiment (B) pour le prochain créneau temporel (TSn+1), l'optimisation des charges et/ou des ressources de stockage ou de production électrique du bâtiment (B) et/ou de l'alimentation électrique du réseau dudit bâtiment (B), en termes de confort et de coûts de l'utilisateur, éventuellement la soumission d'au moins une demande d'offre ou de mande (SR, DR) et l'accusé de réception des un ou plusieurs résultats commerciaux.

23. Procédé selon l'une quelconque des revendications 1 à 22, dans lequel chaque système de gestion de l'énergie du bâtiment (BPMS) est, dans une phase préliminaire, programmé par un utilisateur correspondant au moyen d'une interface utilisateur adaptée, de préférence en remplissant un questionnaire de préférences, incluant des choix de paramètres de confort et économiques.

24. Procédé selon l'une quelconque des revendications 1 à 23, dans lequel un accord d'échange d'énergie entre un premier utilisateur actif (U1) ayant besoin d'une énergie supplémentaire pendant au moins un créneau temporel futur (TSn), et consommateur volontaire de ladite énergie manquante, et un second utilisateur actif (U2) ayant un excès d'énergie disponible pendant au moins le même créneau temporel (TSn), et fournisseur volontaire de ladite énergie excédentaire, comprend les étapes suivantes :
- déterminer, par les deux systèmes de gestion de l'énergie des bâtiments (BPMS) concernés, la quantité d'électricité manquante ou excédentaire et des prix d'achat maximal ou prix de vente minimal correspondants,
- élaborer les demandes de demande ou d'offre (DR, SR) et les envoyer à la place de marché électronique (EMP),
- avoir analysé ladite demande (DR) et ladite demande d'offre (SR) par la place de marché électronique (EMP) et les avoir soumises à l'algorithme d'appariement adapté,
- si aucun accord n'est atteint dans le délai prédéfini, annuler les deux demandes (DR et SR) et en informer les deux utilisateurs (U1 et U2),
- si une transaction est conclue dans le délai prédéfini, formaliser la transaction en effectuant/fixant la procédure de paiement entre les deux utilisateurs (U1 et U2), préparer l'acte correspondant et l'envoyer aux utilisateurs, vérifier l'acte et la couverture de la demande d'énergie du côté du premier utilisateur actif (U1), vérifier l'acte et la couverture de l'offre du côté du deuxième utilisateur actif (U2) et conclure la transaction si les deux couvertures sont confirmées.

25. Agencement de réseau électrique local basse tension à autogestion comprenant
un réseau local basse tension (G), auquel est attribuée une puissance livrable globale (GDP),
un transformateur (T) dédié à la fourniture d'une quantité maximale donnée d'énergie électrique extérieure (OP) audit réseau (G),
des bâtiments (B) qui correspondent à des utilisateurs finaux respectifs (U) et qui sont reliés entre eux et au secondaire du transformateur (T) par l'intermédiaire du réseau (G), chaque bâtiment (B) comprenant un système de gestion d'énergie de bâtiment (BPMS) qui surveille et commande automatiquement les flux d'énergie dudit bâtiment, étant configuré pour déterminer les besoins futurs en énergie du bâtiment concerné (B) et étant conçu pour communiquer avec une place de marché électronique (EMP), et
une place de marché électronique (EMP) exécutant un algorithme d'appariement,
dans lequel une valeur de consommation électrique prédéterminée (ACPV) est attribuée et fournie par défaut à chaque bâtiment (B), cette valeur correspondant à une fraction de la puissance électrique extérieure fournie (OP),
dans lequel l'offre et la consommation d'énergie des bâtiments (B) ou des utilisateurs (U), ainsi que la distribution d'énergie au sein du réseau (G), sont réparties temporellement et prises en compte par l'algorithme d'adaptation et par les systèmes de gestion d'énergie des bâtiments (BPMS) dans des créneaux temporels consécutifs (TS), un bâtiment (B) ayant, pour chaque créneau temporel futur (TSn), soit besoin d'une puissance supérieure ou inférieure à sa valeur attribuée (ACPV), soit étant susceptible de consommer approximativement ladite valeur attribuée (ACPV),
dans lequel les systèmes de gestion de l'énergie (BPMS) des bâtiments (B) ou des utilisateurs (U) qui sont capables et désireux de fournir une quantité donnée d'énergie excédentaire au réseau (G) ou qui ont besoin et sont désireux de prélever une quantité donnée d'énergie manquante du réseau (G), pour au moins un futur créneau temporel donné (TSn), sont conçus pour élaborer et soumettre des demandes correspondantes (SR, DR) à la place de marché électronique (EMP),
où ladite place de marché électronique (EMP) est conçue pour traiter automatiquement lesdites demandes de demande et d'offre (DR, SR) et s'efforcer de régler des transactions d'échange d'électricité entre les bâtiments (B) ou les utilisateurs (U) impliqués, de préférence au plus tard avant la fin du créneau temporel (TSn-1) précédant immédiatement le créneau temporel concerné (TSn), en échangeant avec les systèmes de gestion d'énergie concernés (BPMS), en utilisant l'algorithme de correspondance adapté et en prenant en considération, comme paramètres de traitement, au moins un prix de vente minimal (MSP) et un prix d'achat maximal (MBP) prédéfinis par chaque utilisateur connecté (U) et, comme conditions de limitation impératives, au moins la puissance distribuable globale (GDP) du réseau pendant le créneau temporel considéré (TSn) et une limite d'offre maximale pour chaque utilisateur connecté (U), correspondant au moins à la limite physique de sa connexion au réseau (G) et de préférence à sa valeur de puissance de consommation attribuée par défaut prédéfinie (ACPV).

26. Agencement selon la revendication 25, dans lequel chaque système de gestion d'énergie de bâtiment (BPMS) comprend des moyens pour collecter, stocker et évaluer des données historiques de consommation du bâtiment associé (B), des moyens pour calculer de manière répétée une prévision de consommation pour ledit bâtiment et pour évaluer automatiquement ses besoins potentiels pour équilibrer positivement sa capacité, au moins pour le prochain créneau temporel (TSn), des moyens pour élaborer et envoyer des messages de demande d'offre et de demande (DR, SR) et des moyens pour couper sélectivement certaines ou toutes les charges du bâtiment associé (B), ou pour déclencher des moyens de coupure adaptés.

27. Agencement selon la revendication 25 ou la revendication 26, dans lequel les systèmes de gestion d'énergie (BPMS) des bâtiments (B) ou des utilisateurs (U) comprennent des moyens pour prévoir la production de puissance d'un ou de plusieurs dispositifs de génération de puissance électrique capables d'exploiter (a) une ou plusieurs sources naturelles d'énergie au moins lors du créneau temporel suivant (TSn).

28. Agencement selon l'une quelconque des revendications 25 à 27, dans lequel chaque système de gestion d'énergie de bâtiment (BPMS) comprend des moyens pour gérer la charge du bâtiment associé (B) en fonction de la contrainte du réseau ou de la capacité disponible du réseau, et des moyens pour couper la charge générant une consommation d'énergie supérieure à la valeur de consommation d'énergie électrique prédéterminée (ACPV) dudit bâtiment.

29. Agencement selon l'une quelconque des revendications 25 à 28, dans lequel chacun des messages de demande d'offre et de demande (DR, SR) envoyés par les systèmes de gestion d'énergie concernés (BPMS) à la place de marché électronique (EMP) comprend au moins les données suivantes : l'identité des systèmes de gestion d'énergie émetteurs (BPMS), le type de demande (offre/demande), les un ou plusieurs créneaux temporels concernés (TS), la quantité d'énergie concernée et la valeur seuil de vente/achat.

30. Agencement selon l'une quelconque des revendications 25 à 29, dans lequel la place de marché électronique (EMP) est hébergée et exécutée sur un système de gestion de réseau informatisé (GMS), ledit système étant configuré pour également vérifier en continu la contrainte sur le réseau (G), gérer une réserve de puissance (PR) et commander l'injection dans ledit réseau (G) d'une puissance supplémentaire provenant de ladite réserve de puissance (PR).

31. Agencement selon l'une quelconque des revendications 25 à 30, lequel est configuré et conçu pour mettre en œuvre le procédé selon l'une quelconque des revendications 1 à **24.**
